# EUROPEAN PATENT APPLICATION

(11) **EP 1 675 415 A2**
(43) Date of publication of application: **28.06.2006**
(21) Application number: 06003458.4
(22) Date of filing: 25.06.2002
(51) Int. Cl.: H04Q 7/22

(54) **Message transmission system and method**

(30) Priority: 25.06.2001 GB 0115493; 24.09.2001 GB 0122943; 18.02.2002 GB 0203796
(62) Divisional of application: 02743372.1
(71) Applicant: Empower Interactive Group Limited, London W4 5YB (GB)
(72) Inventor: The designation of the inventor has not yet been filed
(74) Representative: Kazi, Ilya

(57) **Abstract**

There is described herein a system and method for providing routing information for messages sent to or from an application connected to a mobile telecommunications network. The method includes providing at least one location network element containing location information for the application and at least one switch network element providing a static connection between the application and a mobile switching centre of the mobile network. The location network element and the switch network element are connected via a data transfer link separate to the mobile network. The method further includes monitoring the load on the at least one switch network element at the location network element and supplying routing information from the location network element, wherein the routing information supplied is dependent on the load determined on the switch network element.

## Description

This invention relates to the field of mobile telecommunications, and more specifically, to the sending of messages such as Short Message Service (SMS) messages between Short Message Entities (SMEs), which term includes any device that is capable of sending or receiving short messages, such as a mobile telephone. This invention is applicable to the transmission of SMS messages in a GSM network, but can also be applied to the transmission of messages in other networks (for example a third generation (3G) network).

The invention relates particularly, but not exclusively, to the sending of SMS messages between mobile telephones and applications. SMS was originally designed to transmit a small number of messages, such as voice-mail notifications or mobile-to-mobile messages, within a single operator network. By way of background, each user is normally assigned a home Short Message Service Centre (SMSC) which handles messaging for that user. An SMS message is first sent to the home SMSC of the user originating the message. To route a message to its recipient, a request for routing information is normally sent by the SMSC to a Home Location Register (HLR) which contains information for the mobile for which the message is destined. The HLR supplies routing information leading to the Mobile Switching Centre (MSC) connected to the radio link which is in communication with the destination mobile.

The basic system works within a network but a problem arises if the destination mobile is on a different network as the network HLR will not have an entry for the destination mobile. To overcome this, gateway MSCs (GMSCs) have been introduced, under network interconnect agreements, to enable mobile-to-mobile message transmission between users on different networks; this is achieved by routing the request for routing information via a gateway connecting networks of different operators. However, the home SMSC remains responsible for delivering outbound messages.

As well as user to user communication, it has been proposed to communicate messages between applications and users. A simple solution to the problem of sending messages between an application and a user is to use a mobile modem. In this solution, a mobile telephone (or a dedicated GSM radio modem) which is assigned a mobile number (Mobile Station ISDN (MSISDN)) is connected to an application (for example, via an infrared link or a cable to a computer running an application) so that the device receives incoming SMS messages and forwards them to the application. The modem or telephone behaves exactly as another mobile user (it is physically equivalent) as far as the network is concerned, and gateways which allow network to network interconnection operate as normal. However, this solution has a very limited throughput of SMS messages, typically only of the order of one message every seven seconds, and also uses the expensive and potentially unreliable air interface. This solution is not readily scalable. Limited scalability for outgoing messages can be achieved by providing multiple modems but each of these must have a unique MSISDN number and occupies valuable and limited air interface bandwidth and there is a limit to how many devices can be accommodated in a cell. Furthermore, incoming messages are still limited in throughput per mobile number (and it is not normally practicable or desirable to have to give potential senders of incoming messages multiple incoming numbers to try in the hope that one will be capable of receiving messages). Thus, this is not a practical solution to the problem of sending (and more particularly receiving) high-volume SMS traffic.

For serious applications requiring a high throughput, a completely different approach has therefore been adopted. A solution to the basic problem can be achieved by connecting an application directly to the mobile telephone network at an SMSC and allocating a "short code" to the application. "Short codes" differ from standard MSISDN numbers in that they are typically only a few digits long and each SMSC only has a limited number of "short codes" that it can allocate to applications. Using proprietary techniques, a message arriving at an SMSC addressed to a "short code" can be intercepted by the SMSC (assuming the SMSC is configured to recognise the short code) and sent directly to an application using a proprietary "back end" interface, rather than being routed over the telecommunications network.

A problem with this system is that, since it requires the SMSC to "intercept" the message rather than send it over the network, mobile telephone users can only send messages to an application connected directly to their home SMSC. Messages that arrive at an SMSC addressed to an application short code cannot be routed across the network to other SMSCs and if a message is sent to a "short code" that is not configured on a particular user's home SMSC the message will not be delivered. For the application providers, this means that to obtain useful coverage an application must be connected to all SMSCs of relevant users. Another problem is that "short codes" are intrinsically "local" to an SMSC and different networks may not assign the same "short codes" to the same application, even if the application has been connected directly to multiple SMSCs in multiple networks. A further problem with connecting an application directly to an SMSC is that a further load is placed on an important network element and a faulty connection to an application may cause the SMSC itself to fail causing network disruption. Network operators therefore need to perform rigorous tests on any application having a connection to their SMSCs.

To overcome some of the limitations of the above method, it has been proposed to exploit a provision in the GSM standards to allow messages to be sent flagged "reply-by-same-centre". This potentially allows users on any network who have received an initial message to reply to SMS messages by sending the reply via the SMSC from which the message originated, rather than the user's normal home SMSC. The message can then be intercepted at the originating SMSC and so the need for connections to multiple SMSCs is avoided. However, this only works when replying to a message. Furthermore, as networks are generally designed so that users always use an SMSC within their own network to send outgoing messages, this usage may cause problems for network operators. As a result, the provision allowing "reply by same centre" has now been blocked on some networks.

The present invention, outlined in more detail below, addresses these and other problems, aiming to facilitate messaging with fewer limitations.

Aspects of the invention are set out in the independent claims and preferred features are set out in the dependent claims. Preferred features of each aspect may be applied to other aspects and may be combined unless otherwise stated. Advantages will become apparent as the description proceeds.

In a first aspect, the invention provides a method of routing a message to an application via a mobile telecommunications network, in which mobile devices are assigned globally unique mobile identifiers, comprising: assigning at least one virtual mobile identifier to the application; receiving a request for location information for said virtual mobile identifier; and supplying routing information corresponding to a static connection to said application in response to said request.

In a second aspect, the invention incorporates a method of providing routing information across a mobile network for at least one application comprising: storing at least one globally unique identifier; storing an identifier of at least one application assigned to the at least one globally unique identifier; storing routing information for the at least one application via at least one predefined connection point; and responding to requests for location information for the globally unique identifier by supplying routing information for the assigned application.

By assigning a virtual mobile identifier (which preferably has a format corresponding to the format of a real mobile identifier) to an application, the network(s) involved in passing on the message will at least initially treat a message destined for an application as a message for another mobile. Thus routing across network gateways (for example) is performed automatically using existing technology. However, in response to a request for routing information for the virtual mobile identifier, the routing information supplied actually ultimately leads to a static connection to an application (instead of pointing to a switch connected to a radio link as it would in the normal case). In this way, communication may be seamlessly directed to an application from any message originator's home SMSC without requiring the message originator's home SMSC to be modified or to be connected to the application - the application is effectively treated by the originating SMSC as a remote mobile device.

The term "static connection" is preferably intended to connote a connection other than a conventional connection to a mobile device and preferably connotes a connection which is pre-configured. The connection preferably does not require use of the air interface. This is advantageous since bandwidth on the telecommunications air interface is expensive and so the interface easily becomes congested. However, the static connection may include multiple connections and may be updated or re-configured.

The routing information for the static connection is preferably periodically updated. One purpose of the updating process is to monitor the availability of the applications assigned to the virtual mobile numbers so that messages are not routed to applications that are unavailable to receive those messages.

In a preferred embodiment, more than one virtual mobile identifier may be assigned to each application. Having a range of identifiers for a single application gives the application operator the flexibility to provide a multi-channel service; for example, using one application to record votes for different people in a television contest depending on the mobile identifier number used to submit the vote.

Preferably, the virtual mobile identifier has the same format as the globally unique identifiers used for mobile devices in the mobile network; for example, it may comprise an MSISDN number (which, in this case, is assigned to an application rather than a mobile device). This allows an application operator to use one number that subscribers of every network can access and which is in a form easily recognisable to potential customers.

in one implementation, the location information is stored in at least one network element containing location information for a plurality of mobile devices. The location information may be stored as entries in an existing network Home Location Register (HLR). This gives the advantage that requests for location information for a plurality of "real" mobile devices and also for "virtual" mobile devices, such as an application, may be directed at the same network element.

However, more preferably, the mobile network may have a first network element, typically a Home Location Register (HLR), that stores location information for mobile devices connected to the network, and a second network element containing location information corresponding to the application. That is, preferably, the location information corresponding to the application is stored in a network element separate to the HLR. This reduces the load on the network's HLR (which must cope with multiple requests rapidly) and may also allow greater flexibility for virtual mobile devices, as will become apparent.

A further advantageous feature is that a plurality of physically separate network elements may be used to store location information for the applications. This is advantageous since, if one of the network elements fails, only the applications with location information stored in that network element will no longer be able to receive messages; the majority of the applications will be unaffected since their routing information will be stored elsewhere.

A further feature is that the plurality of elements storing location information are preferably located at geographically disparate locations; this can increase fault tolerance and reliability. For example, if there is a power outage at one of the geographically disparate sites, then the elements at the other sites will continue to operate.

Most preferably, more than one of the plurality of physically separate network elements stores routing information for the same application. This is advantageous since it further increases fault-tolerance and reliability; if data is lost from one network element, then a copy of this data can be used from another network element. For a conventional HLR, there must be only a single master copy of the routing information. However, it has been appreciated that multiple copies can be stored for a virtual mobile device. A further advantage of more than one network element having a copy of the routing data for an application is that messages for applications can be routed by network elements that are located close(r) to the elements requesting the routing information. This may mean that the routing information may be transferred shorter distances across the network saving on expensive SS7 bandwidth.

Preferably, the plurality of physically separate network elements is connected by a data transfer link separate to the mobile network. This allows routing information to be transferred between the location network elements without using the limited/expensive SS7 bandwidth. A further advantage of providing a separate data transfer link is that it relieves the load on the telecommunication (SS7) channels. In a preferred embodiment, this separate data transfer link is an Internet Protocol (IP) network. Arr IP network may provide the advantage of cheaper and more resilient bandwidth than an SS7 network.

An advantageous feature facilitated by the fact that data can be transferred without causing SS7 congestion between the network elements is that the location data stored can be exchanged and periodically updated between the network elements. This means that more than one location network element can store the most up to date location data for an application.

The invention further provides a method wherein a predefined connection point to a mobile network is provided via a network element providing a static connection between a mobile switching centre (MSC) and an application. If a dedicated network element is used to connect the application, via a static connection, to an MSC of the mobile network, then all messages for the application can be routed through this network element. Preferably, the static connection of the application to the mobile network does not pass over the air interface. Again, this has the advantage of further decreasing the load on the air interface, which may make it cheaper for application operators to connect to the mobile network. In a preferred embodiment, the connection of the application to the network element providing a static connection between an MSC and an application is over an Internet Protocol (IP) network. An IP network provides cheaper bandwidth than the common SS7 telecommunications air interface. A further advantage of using IP to connect the applications via the network element to the mobile network is that IP is already widely known and used, so it is relatively straightforward for application operators to implement the connection. Preferably, the connection of the application to the network element providing a static connection between an MSC and an application is a secure connection over an open network. This provides the advantage that messages can be transmitted over a resilient network but securely between the network element and the application.

Preferably, the static connection between the application and the network element providing access to the mobile network via an MSC may be updated or reconfigured. This feature allows location and routing information stored for the applications to be updated when applications are unavailable to receive messages, orwhen they again become available. It also allows the route taken to deliver a message to a particular application to be changed, for example, so that the message is delivered through a different network element.

A further preferable feature is that the static connection of the application to the mobile network bypasses a Short Message Service Centre (SMSC), at least for messages directed to the application. This may prevent large peak loads being placed on the SMSC, for example if multiple users send a message to an application at a given time. As explained in more detail below, this is advantageous to both the network operator, whose SMSC does not have to deal with the large peak loads in incoming messages, and to the application operator, who does not have to purchase a large busy hour licence on the SMSC to cover large peaks in incoming messages.

In a further aspect of the invention, an application is connected to the mobile network via a plurality of network elements each providing a static connection between an MSC and the application. One advantage of connecting the application to the mobile network via a plurality of network elements is that a further degree of redundancy and fault tolerance is introduced into the system. If one network element fails, then messages can be routed to the application through one of the other network elements. Furthermore, the load can be shared between network elements. As discussed in more detail below, this aspect of the invention facilitates the possibility that the routing information provided for the application need not always be through the same network element.

Preferably, the plurality of network elements providing a static connection between an MSC and an application are interconnected by a data transfer link separate to the mobile network. Again, this allows communication between the network elements to take place without using expensive SS7 bandwidth. Connection between the network elements may be used to communicate information regarding the static connections to the applications between network elements. This information may include status information about the applications, such as the availability of the applications to receive messages.

A further aspect of the invention provides a method wherein at least one location network element contains location information for the application and at least one switch network element provides a static connection between an MSC and an application, and wherein the or each location network element and the or each switch network element are interconnected by a data transfer link separate to the mobile network. This embodiment both to supplies routing information for the application to the mobile network and, in addition, provides a static connection through which to route messages to the application. As discussed above, it is preferable to have the plurality of location network elements interconnected by a data transfer link separate to the mobile network and to have the plurality of switch network elements interconnected by a similar link. In this embodiment, the invention further provides a data link between the plurality of location network elements and the plurality of switch network elements. Communication between the location network elements and the switch network elements may be used to implement features such as monitoring of the load on the switch network elements by the location network elements. This may be used by the location network elements to perform load balancing between the switch network elements (e.g. by selecting routing information) to ensure maximum message throughput.

A further preferable feature is that a location network element is connected to a plurality of switch network elements each switch network element, providing a static connection to the network for the application. This provides redundancy in the application connections to the mobile network. This feature may allow messages to be routed to the application via more than one switch network element.

In a further aspect, the invention provides a method comprising generating a call data record (CDR) for a virtual mobile device containing information including at least one of: the originator's MSISDN number; the service centre (SC) number; the recipient's MSISDN number; the time/date that the message was sent; identification of the originating account owner and; the billing plan of the originator. This feature may be used within the system, or externally to the system to provide information such as, the rate of messages passing through the system and the number of messages passed to each application.

Preferably, the method further comprises providing remote access to the call data records. This allows a separate network element to access the records for purposes such as billing the message originator.

Preferably, the location network element selects the static connection through which to route a message to an application based on at least one predetermined criterion. This feature may allow a message to be routed to the application more effectively than by routing all the messages in the same way.

Preferably, the routing information provided for a given application varies between network elements within the plurality of network elements. An advantage of this is that the routing information provided to the requesting element may vary, for example, according to factors such as the location of the source of the request. For example, messages may be routed to travel a shorter distance on the SS7 network.

A further aspect of the invention provides a method for providing routing information across a mobile network for at least one application wherein the routing information supplied in response to a request for information is selected based on at least one condition other than the location of the application. This feature provides the advantage that factors other than the application location may be used to determine the best way for the packet to be routed to the application. Factors such as the load on the connections to the application and the proximity of those connections to the source of the request may be incorporated. The advantages of incorporating these factors are discussed in more detail below.

Preferably, the routing information is dynamically compiled in response to a request. In contrast with a conventional HLR which simply retrieves stored information on request, "active" routing for an application may be performed. The routing information is preferably compiled based on the location information for the application, which is stored in the location network element, and on other predetermined conditions.

Preferably, the routing information supplied comprises information selected from a plurality of available connections to the application based on the location of the source of the request. As mentioned above, it may be advantageous to base the routing information supplied on the location of the source of the request so that the message may travel a shorter distance using SS7. Using this feature, the message may be transferred to a switch network element that is connected to the application and that is also situated close to the source of the request rather than a switch network element situated further from the source of the request. As discussed in more detail in the description, the distance between the source of the request and the connections to the application may simply be based on a measure of the geographic distance between the elements, or it may be a measure of the "network" distance between the elements on the mobile network, which may take into account cost and/or availability of links.

Preferably, the routing information is provided based on a measure of application availability. For example, messages may not be sent to an application unless the application is available to receive the messages. This may have the advantage that messages are automatically stored in the originator's SMSC until the application becomes available.

Preferably, a route is selected by the location network element based on measures of availability of a plurality of connections to the application. In this way, the location network element can perform load balancing between switch network elements. If one switch becomes particularly busy, the location network element is preferably able to direct further messages towards a less busy switch network element.

Preferably, a further condition governing delivery of a message to an application is based on the availability of the connection point to the application. This ensures that routing information is not provided for messages to be sent to an application if there is no connection available to that application.

A further aspect provides a system for delivering messages including means for monitoring the availability of at least one application connected to a mobile network. This may include means for signalling that an application is unavailable to the network, preferably in the same way as unavailability of a mobile device is signalled. Preferably, the information provided by the monitoring means can be used to update or modify routing information to be supplied based on a measure of application availability.

Preferably, the routing information provided is based on a combination of at least two criteria. More than one criterion may be used to determine the best way of routing the message to the application. Preferably, the combination of predetermined criteria is calculated including a weighting factor for each of the criteria. This allows more importance to be assigned to certain factors than to others. For example, it may be preferable that the message is routed through a less busy switch other than through a switch closer to the source of the request.

A further aspect of the invention provides a method of connecting at least one application to a mobile network comprising: providing a connection for at least one application; and providing a connection at the core network signalling protocol layer to at least one switch on the mobile network and; routing a message directed to the application via said connection. Connecting the application to a switch on the mobile network at the core network signalling layer may mean that incoming messages for the application do not have to pass through the air interface or an SMSC.

The core network signalling protocol preferably comprises the SS7 protocol. If the switch network element connects to the mobile network using this protocol, then few changes need to be made to the mobile network to incorporate the new switching element.

Preferably, the connection to the at least one application is over a data transfer link separate to the mobile network and the separate data transfer link preferably comprises an Internet Protocol (IP) network, the advantages of which are also discussed above and in the more detailed description which follows.

Preferably, the connection to the at least one application is via a gateway, which provides an interface between the at least one application and the mobile network. The gateway may provide an interface between the protocol(s) of the mobile network and at least one other protocol used by an application.

Preferably, the gateway provides a secure connection between the application and the mobile network.

Another preferred feature is that the connection to the at least one application bypasses the air interface of the mobile network. As discussed above, this is advantageous since the air interface is expensive and easily becomes congested.

Preferably, the connection to the application comprises a connection via a switch dedicated to serving the at least one application. This has the advantage that the switch only has to deal with routing traffic for the at least one application and means that it is not congested with routing traffic for other mobile devices.

A further aspect of the invention provides a computer program or computer product comprising instructions for performing a method according to any of the preceding claims.

A further aspect of the invention provides a data packet for transmission over a network carrying information regarding the status and location of an application. Preferably, the location information within the data packet includes information for routing a message to the application.

A further aspect of the invention provides a data structure stored in a network element comprising at least one virtual mobile identifier, an identifier of at least one application, and an assignment of at least one application to at least one virtual mobile identifier.

The invention further provides apparatus that is capable of carrying out any one of the methods described herein.

A further aspect provides a method of routing messages between an application and a mobile telecommunications network wherein messages are passed from the application to the mobile network without passing through a Short Message Service Centre (SMSC). This may be advantageous in reducing the load on the SMSCs of the mobile network and may allow application operators to overcome many of the problems described herein and which arise in connecting an application to an SMSC and in sending large volumes of messages from an application through an SMSC, particularly if the messages are sent in transient spikes.

Preferably, the method of routing messages further comprises: receiving the message from the application over a static connection, requesting routing information for the globally unique identifier associated with the destination address of the message and routing the message to the message recipient via the mobile network.

Preferably, the method further comprises routing messages from the mobile network to the application according to the method of the first aspect or any of its dependent features. This may allow the provision of a full two-way messaging service for applications connected to a mobile telecommunications network. Means both for sending and for receiving messages may be provided via one connection to the network.

Preferably, the static connection of the application to the mobile telecommunications network does not pass over the air interface. This may reduce the load on the air interface and may allow the application to connect to the network using a well-defined standard protocol, rather than using a proprietary interface.

Preferably, the message is routed to the message recipient via at least one component in a network of message delivery points, the message delivery points being interconnected over a network separate to the mobile telecommunications network and the separate network being connected to the SS7 layer of the mobile telecommunications network at a plurality of points. This may allow the use of the SS7 layer to be minimised in the delivery of each message.

Preferably, messages are automatically rejected according to at least one predetermined condition. This may allow some automatic control of where messages are sent to and received from.

Preferably, the at least one predetermined condition includes the destination address of the message. This may allow the provision of mobile station blacklisting, which may be used to block applications from sending messages to barred mobile stations, or to groups of mobile stations, such as those on a particular network.

More preferably, the at least one predetermined condition includes the identity of the service centre by which the routing information for the application was requested. This may be used to block the sending of messages to the application from particular SMSCs on the mobile network, such as the SMSCs of a particular operator.

Preferably, at least one service feature may be made available selectively to at least one application. This may allow the provision of a more specialised service for each application.

Preferably, a predetermined subset of service features may be provided to at least one application. Particular service features may be made available to some applications. This may be done by the request of the application operator, or some features may be provided automatically to applications with particular properties, for example it may be advantageous to provide particular additional features to applications that send large transient volumes of messages. Providing sets of preferable features may also be useful for limiting users to certain types or levels of service.

Preferably, the at least one service feature comprises the provision of at least one of: the "Outbind" procedure, windowing and support for enhanced messaging services. These features may allow some application operators to provide an enhanced service to their users.

Preferably, the method further comprises generating internal system reports. More preferably, the data contained in the internal system reports includes at least one of: usage data, provisioning information and error records. This may allow monitoring of the system as well as fault detection and resolution.

Preferably, the method further comprises generating user reports for specific applications. These reports may be made available to application operators or may be used internally to monitor usage of the system by individual applications.

Preferably, the method further comprises providing at least one advanced messaging function. More preferably, the at least one advanced messaging function includes at least one of: sessions, variable retry schedules, variable priority levels, support for native Smart Messaging (for example, those constructed from RTTTL, GIF, BMP) and support for Enhanced Messaging Service functions. This may allow a wide range of messages to be sent and received by the application.

The provision of voice services by the application is preferably also facilitated. This may allow the application to use the same connection to the mobile network for both SMS based services and voice services.

A further preferable feature is that at least one message comprises a multimedia message.

In addition, the method may further comprise providing support for high density signalling on the mobile telecommunications network.

In a further, apparatus, aspect, there is provided apparatus for routing messages between an application and a mobile telecommunications network comprising:
means for routing messages from the mobile network to the application according to the method of the first aspect or any of its preferable features;
means for routing messages from the application to the mobile network comprising:
   means for receiving the message from the application over a static connection;
   means for requesting routing information for the globally unique identifier associated with the destination address of the message;
   means for routing the message to the message recipient via the mobile network.

A further apparatus aspect provides apparatus for routing messages between an application and a mobile telecommunications network wherein the apparatus communicates with the mobile telecommunications network at the SS7 layer and the message is passed to the network bypassing the network SMSCs.

According to a preferable feature of the apparatus aspects, the memory type used to store the message received from the application depends on the length of time the message is to be stored.

Preferably, a first type of message storage capability is used for a message that can be routed to its destination without delay. This may allow very fast data throughput for messages that do not need to be stored in the apparatus. The message may be stored in a memory persisted database until routing information is received for the destination address of the message.

More preferably a second type of message storage capability is used for a message that cannot be routed to its destination without delay and which must be stored in the apparatus. This may allow the message to be stored on a magnetic disk, or other long term storage means, if it is not possible to immediately route the message to its destination address once the routing information has been received. Magnetic disks may provide a reliable long term message storage solution.

Preferably, the apparatus further comprises means for providing support for storage area networking with distributed data stores and data mirroring. This may provide a resilient, robust and flexible data storage system.

Preferably, a web-based management and provisioning interface is also provided. This may allow the apparatus to be modified, for example to allow further applications to be connected. It may allow a single access point for management access to the apparatus from any location, even if the network has a wide geographical distribution.

According to a further aspect, there is provided a method of routing at least one message between an application and a mobile telecommunications network via at least one component in a distributed network of message delivery points wherein the distributed network is separate to the mobile telecommunications network and the separate distributed network is connected to the SS7 layer of the mobile telecommunications network at a plurality of points.

A further aspect provides a method of routing at least one message between an application and a mobile telecommunications network comprising routing the message via;
a plurality of message delivery points interconnected over a network separate to the mobile telecommunications network and providing an interface to the SS7 layer of the mobile telecommunications network at a plurality of points;
an application service centre as described in a preceding aspect or any of its preferable features connected to the application and connected over the separate network to the message delivery points.

Preferably, at least one of the message delivery points of the previous aspects intercepts any outgoing message from a short message service centre (SMSC) on the mobile telecommunications network. Hence messages may be intercepted as soon as possible after entering the mobile telecommunications network, reducing the load on the SS7 layer.

Preferably, at least one of the message delivery points intercepts any message entering the home network at a gateway message switching centre (G-MSC). This may facilitate a further reduction in the traffic on the SS7 layer of the home mobile network.

In further advantageous feature, the at least one message is routed over the separate distributed network to the message delivery point that minimises the distance travelled by the message over the SS7 layer of the mobile telecommunications network. In this way, messages may be transmitted over the separate network for the maximum possible proportion of their journeys which may reduce the volume of traffic on the SS7 air interface and allow the mobile telecommunications operator to minimize the SS7 overhead on their network. The separate network may comprise, for example, an IP network.

A related aspect provides apparatus for routing at least one message between an application and a mobile telecommunications network comprising;
a plurality of message delivery points connected over a network separate to the mobile telecommunications network and providing an interface to the SS7 layer of the mobile telecommunications network at a plurality of points;
an application service centre as described in the previous apparatus aspects or any of their preferable features connected to the application and connected over the separate network to the message delivery points.

An embodiment of the invention will now be described by way of example only with reference to the accompanying drawings in which:-
Fig. 1 is a schematic overview of a prior art SMS system operating over a GSM network;
Fig. 2 is a schematic overview of an SMS system operating over a GSM network that incorporates one embodiment of the present invention;
Fig. 3 is a schematic overview of the process of sending a mobile to mobile SMS message in a prior art GSM system;
Fig. 4 is a schematic overview of the process of sending an application to mobile SMS message in a prior art GSM system;
Fig. 5 is a schematic overview of the process of sending a mobile to application SMS message within one network in a prior art GSM system;
Fig. 6 is a schematic overview of the process attempting to send a mobile to application SMS message across networks in a prior art GSM system;
Fig. 7 is a schematic overview of the process of sending a mobile to application SMS message across networks in a GSM system that incorporates one embodiment of the present invention;
Fig. 8 is a schematic overview of one embodiment of the present invention showing the communications channels used by different elements of the network;
Fig. 9 is a schematic diagram showing how one embodiment of the present invention might be incorporated into a prior art GSM network, with multiple applications connected;
Fig. 10 is a schematic diagram showing the standard network connections of a typical VMSC and VMLR installation.
Fig. 11 is a schematic diagram showing one embodiment of the present invention incorporated into a GSM network.
Fig. 12 is a schematic diagram showing the distributed architecture of one embodiment of the present invention.
Fig. 13 is a schematic overview of a distributed network of apparatus according to one embodiment of the present invention.

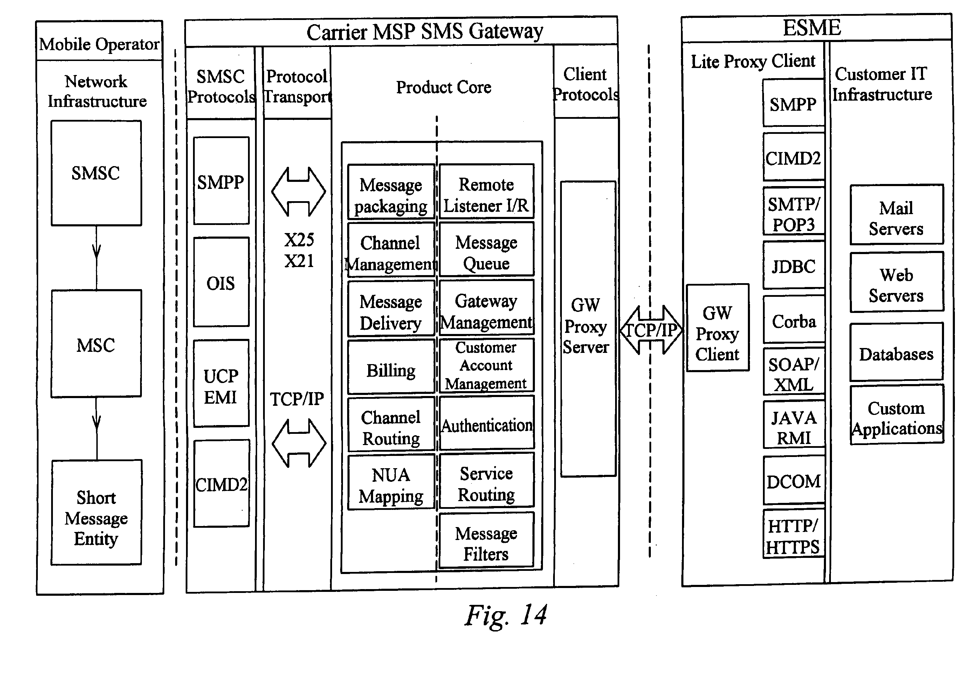

Fig. 14 is a schematic diagram of one embodiment of a gateway that may be used to connect the application to the mobile telecommunications network.

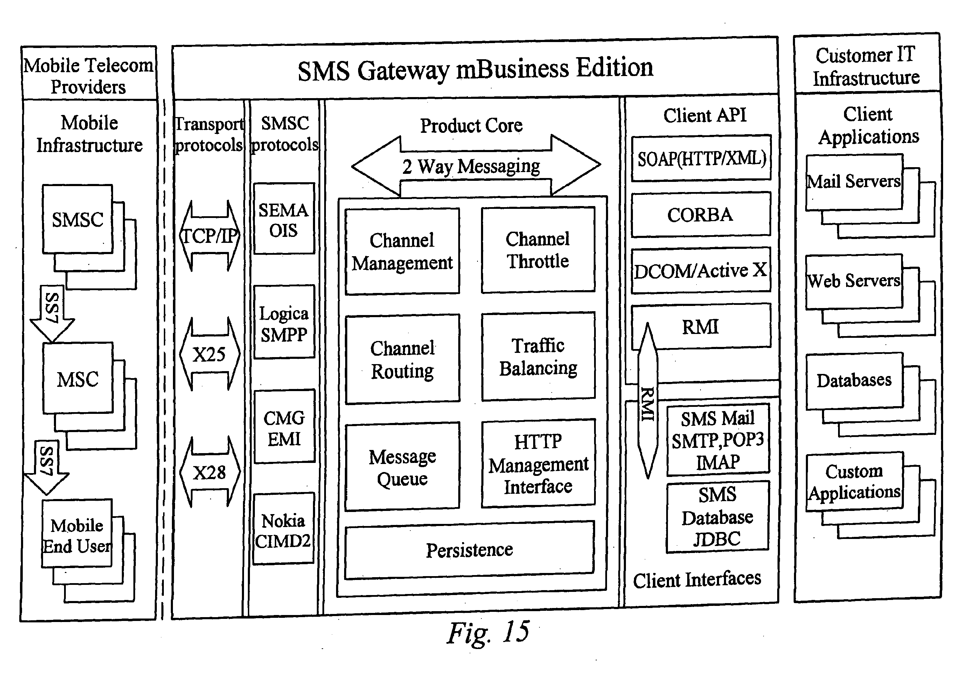

Fig. 15 is a schematic diagram of a second embodiment of a gateway that may be used to connect the application to the mobile telecommunications network.

In a preferred embodiment, the invention is incorporated into a network, preferably defined by the GSM standards, to allow mobile originated, application terminated SMS messaging across networks of different operators without necessarily requiring more than a single operator connection.

By way of illustration, the invention will be described in the context of a GSM network. However, it is to be appreciated that the principles are not so limited and may be applied to other mobile telecommunications networks in which routing information is supplied to enable a message to be passed to a mobile device. Terminology used for convenience and ease of understanding throughout this specification (description, claims and drawings) which corresponds to particular components of a GSM network is to be construed as extending to components of other networks possessing the relevant functionality. To assist, certain terms and a non-limiting outline of relevant functionality will be explained:-
MSISDN (Mobile Services ISDN) - an identifier of a mobile device, preferably globally unique.
HLR (Home Location Register) - a store of at least one identifier of a mobile device and location or routing information for the device.
SMSC (Short Message Service Centre) - a network component which handles short messages, preferably by forwarding to a destination
Short Message or SMS message - a message, typically a packet having a defined length and format and typically distinct from a stream such as voice channel (the invention is not limited to any particular message format or length or even to discrete packets)
MSC (Mobile Switching Centre) or switch - a component capable of routing traffic in a network

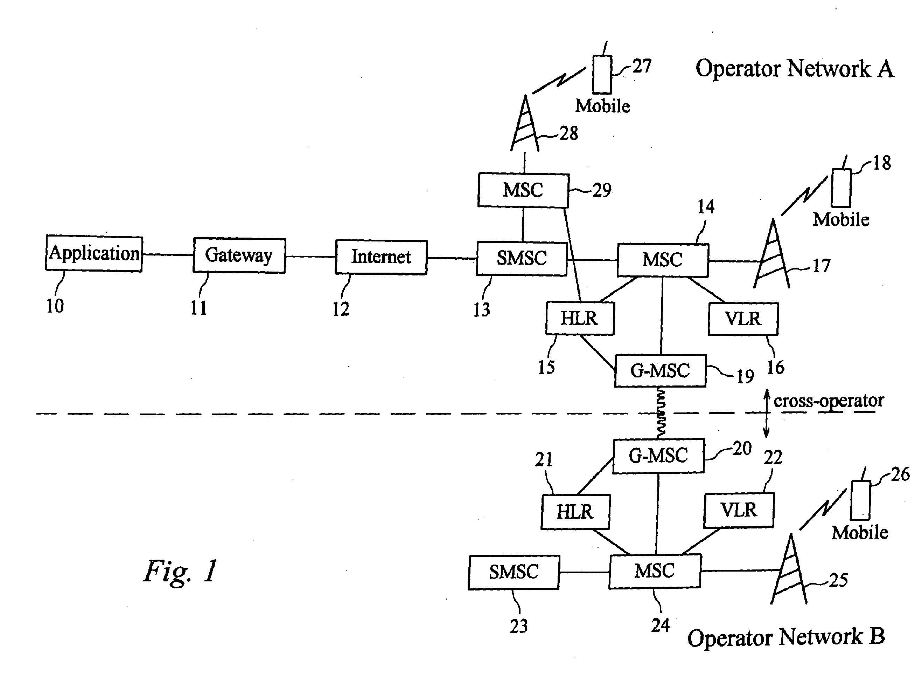

In order to explain more clearly the features of one embodiment of the present invention, we begin with a more detailed description of the existing SMS system in a GSM network follows, with reference to Fig. 1.

The Short Message Service (SMS) was designed as part of the GSM (Global System for Mobile communications) specifications. One skilled in the art will be aware of the relevant GSM standards, to which reference should be made and which are incorporated herein by reference. In particular, reference should be made to GSM03.39, GSM03.40, GSM03.41, GSM04.11, GSM04.12, GSM07.05, GSM09.02 all incorporated herein by reference.

The principles of GSM messaging are well known to those skilled in the art and are succinctly summarised in "A tutorial overview of the short message service within GSM.", G. Peersman et al., Computing and Control Engineering Journal, vol.11, no.2, Apr.2000, 79-89., the entire content of which is incorporated herein by reference.

As defined in the GSM standards, Short Messages are messages that contain up to 140 bytes of raw data, or 160 characters in single character sets. For ease of the following discussion, messages can be classified as one of three types; mobile-to-mobile, application-to-mobile (also known as one-way or mobile terminated (MT) messages) and mobile-to-application (also known as two-way or mobile originated (MO) messages).

### Mobile-to-Mobile Messaging

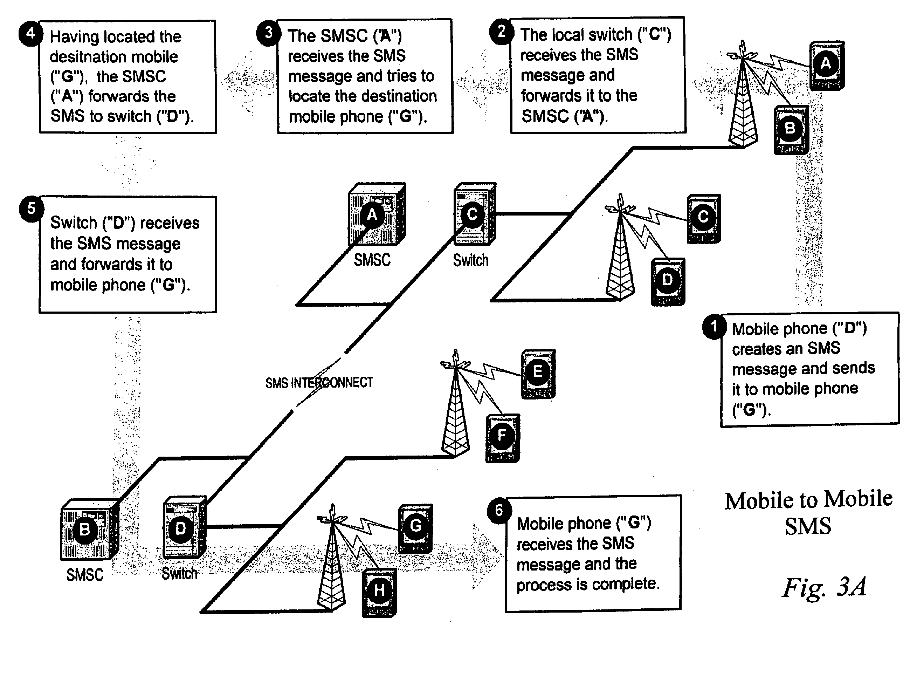

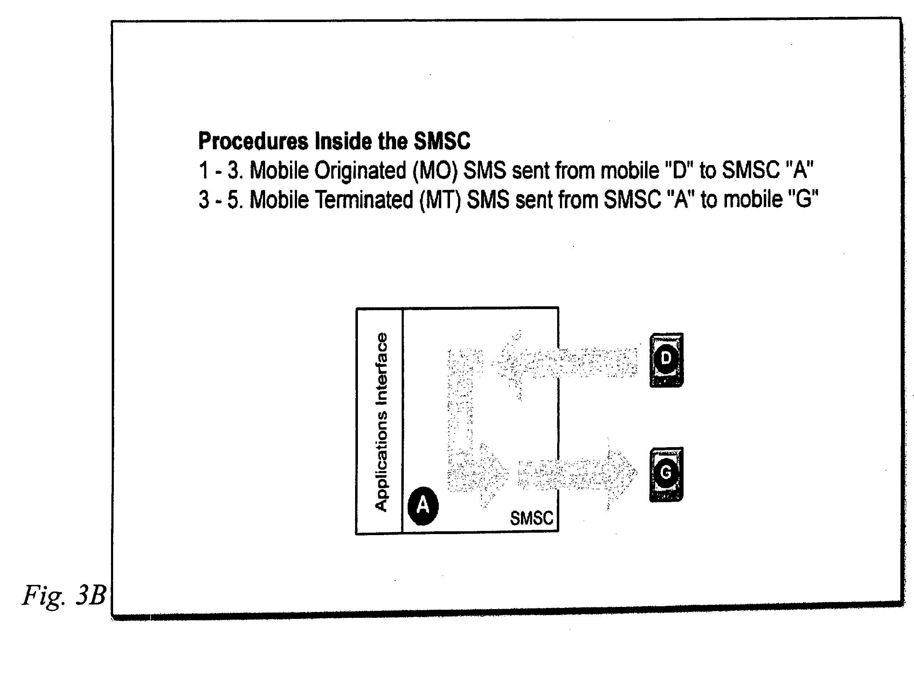

Reference should be made to the schematic overview of the process of mobile to mobile SMS messaging presented in Fig. 3.

A short message is generated by a user at a Short Message Entity (SME), in this case, the user's mobile telephone 18. In addition to the 140 bytes of raw data that can be sent in the message, the message also incorporates a header which contains an identifier of the originating mobile 18, the identifier of the originating user's Short Message Service Centre (SMSC) 13, and the identifier of the recipient mobile 26 or 27; in this case, the mobile telephone number of the receiving user. Since the originating and terminating SMEs are, in this case, mobile telephones, the identifiers are the Mobile Station ISDN numbers (MSISDNs) of the devices.

The mobile 18 transmits the message via its base station 17 to its local mobile switching centre (MSC) 14, which sends it on to the originator's home SMSC 13, defined by the SMSC number in the message. The SMSC 13 must then route the message to the recipient number. Before doing this, the SMSC checks whether the recipient number is in fact a short code and, if so, whether the short code corresponds to an application to which the SMSC is attached, as discussed in more detail below. Assuming the destination identifier is an MSISDN number, as it will be for mobile-to-mobile messages, the SMSC must find a Home Location Register (HLR) entry for the recipient mobile 26 or 27. The HLR entry contains information such as the last known location of the recipient mobile 27, subscription information and any service restrictions. Further details of the HLR specification can be found in GSM standard 09.02.

Mobile telephone network elements communicate using the Common Channel Signalling System No. 7 (SS7) protocol defined by the International Telecommunication Union (ITU) and is used by the elements of the telephone network to communicate, facilitating call setup, routing and control. Using this protocol, the SMSC sends a "send routing information" request to an HLR which contains the relevant information for the destination mobile.

If the recipient mobile user 27 is a subscriber to the same network as the originating mobile user 18, then the SMSC 13 will find a HLR entry for the recipient mobile within its own network HLR 15. Having obtained the HLR information, the SMSC can then send the message to the MSC 29 corresponding to the last-known location of the recipient mobile 27 and the MSC 29 can transmit the message to a base station 28 for broadcast to the mobile 27. If the mobile is not available or does not have the capacity to receive messages at that time, then a message is sent by the MSC 29 back to the SMSC 13. The SMSC 13 retains the message and enters a retry cycle, attempting to send the message again after a specified amount of time. This retry cycle will continue either until the message has been sent, or until a predetermined time period has elapsed. If the network supports the Mobile Waiting Data (MWD) feature, then the HLR will record the identity of the SMSC that attempted to send data and can send an "SC alert" signal to instruct the SMSC to resend the message as soon as the mobile becomes available again.

If the recipient mobile 26 is not a subscriber to the same network as that of the originating mobile 18 then an HLR entry will not be found for the recipient identifier in the SMSC's home network. To obtain the routing information, the SMSC's "Send Routing Information" request (provided the network has interconnect agreements and gateways in place) is routed across the network by the MSCs (using a routing protocol such as SCCP routing), to break apart,the recipient number contained within the request, and determine where the request is to be sent. For example, the first group of numbers gives the country code for the recipient mobile and the second group is defined according to which operator network the mobile user subscribes to. Using this routing method, the request is sent to the appropriate network via the Gateway MSCs (GMSCs) 19,20 that connect the different operator networks under interconnect agreements. Once the message reaches an MSC 24 of the recipient mobile user's network, the "Send Routing Information" request is passed to the HLR of that network 21. The HLR 21 determines the last-known location of the recipient mobile 26 and, assuming the mobile is available to receive messages from the sender, the routing information for that mobile device is sent back to the requesting SMSC 13. The message itself is then sent by the SMSC through the relevant gateways across the network to the MSC 24 corresponding to the recipient 26 for broadcast by the base station 25.

### Application-to-Mobile Messaging

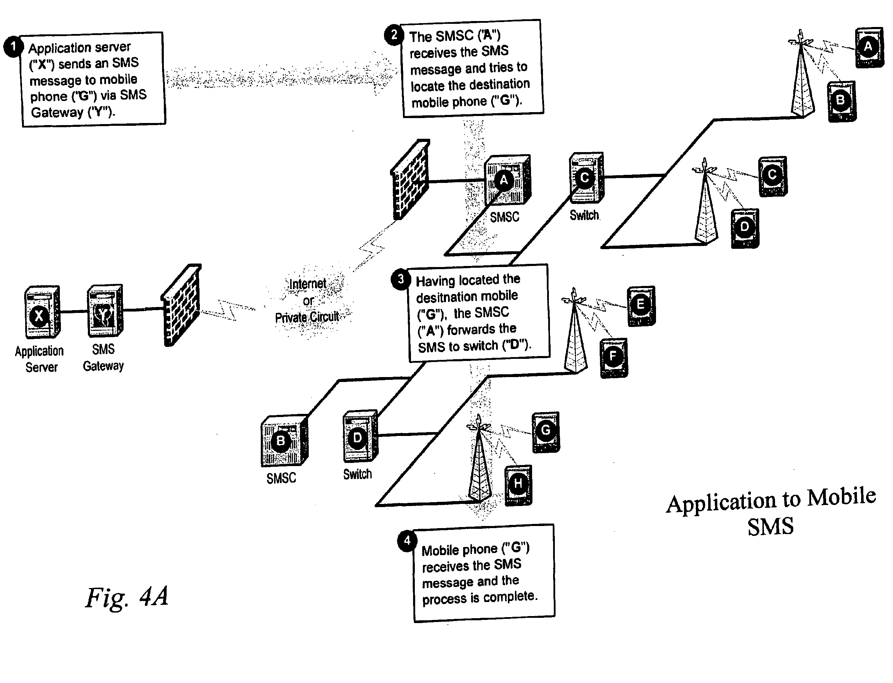

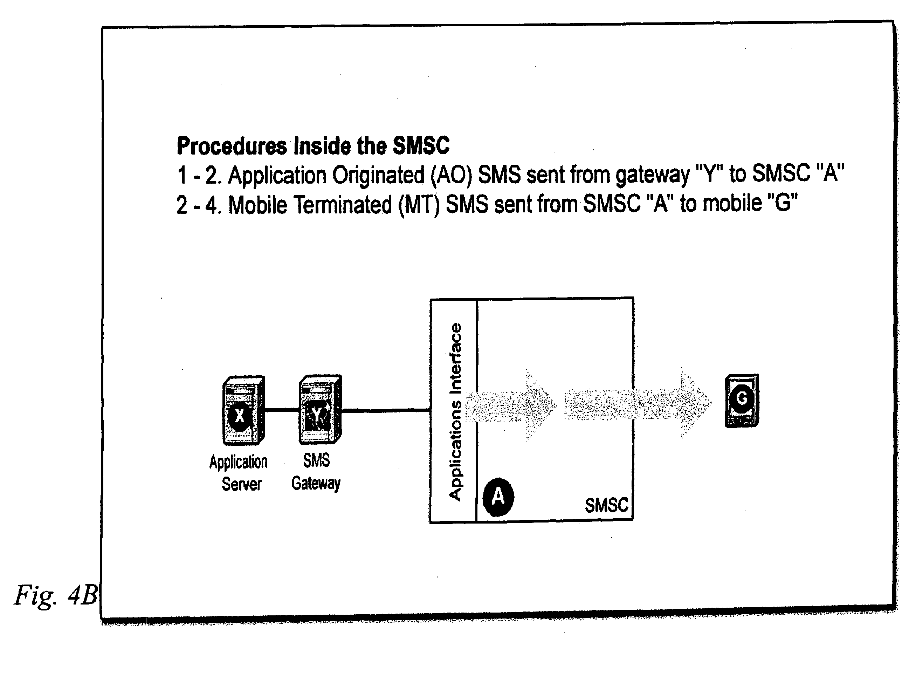

Reference should be made to the schematic overview of the process of application to mobile messaging presented in Fig.4.

For an application 10 to send messages, it must be connected to an SMSC 13. Applications 10 generate mobile-terminated (MT) SMS messages and deliver them to the SMSC 13. These messages are communicated to the SMSC 13 via proprietary protocols (these are not defined in the GSM standards and so are specific to the network operator and the SMSC manufacturer). Once the SMSC has received the message from the application, it deals with the message in the same way as a message received from a mobile device.

It can be seen that for outbound transmission, the process is as for mobile-to-mobile messages, as described above. This means that, for example, application-to-mobile messages can be sent in the same way as mobile-to-mobile messages to mobile devices connected to networks of other operators and so outbound messaging is relatively straightforward, provided that a suitable and robust connection can be made to an SMSC.

### Mobile-to-Application Messaging

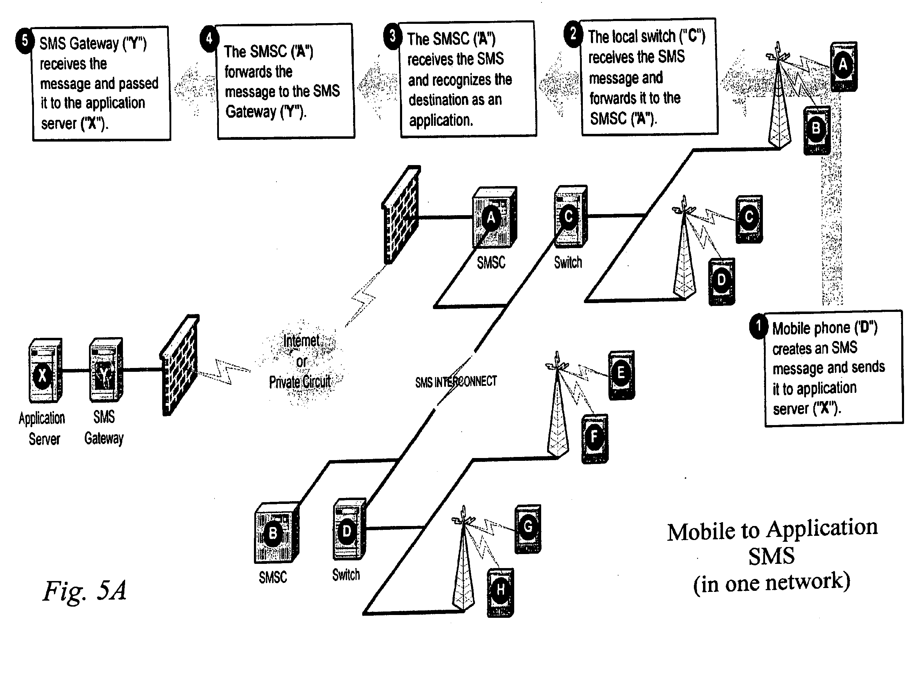

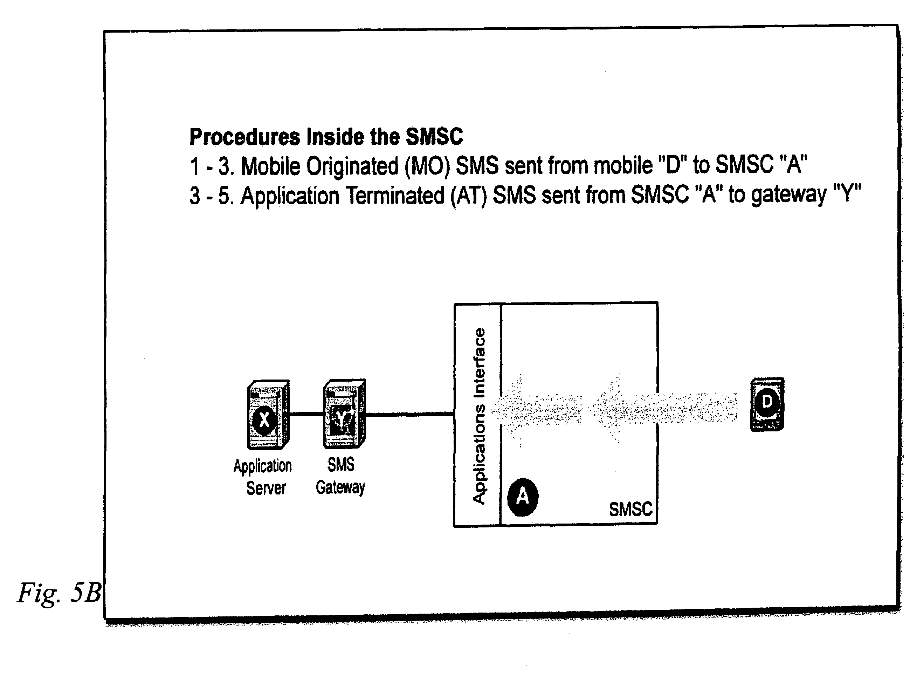

Reference should be made to the schematic overview of the process of mobile to application SMS messaging within a single network presented in Fig. 5.

Applications 10 connected to an SMSC 13 are assigned a "short code" so that the SMSC can uniquely identify the application. When an mobile device 18 sends a message to the network, that message is sent to the home SMSC 13 of the originating mobile device 18. As discussed above, the SMSC 13 recognises "short codes" and a mobile device 18 can send messages to applications connected to its home SMSC 13 by addressing the messages to the application "short code". Provided the application is connected, the SMSC 13 will recognise the recipient number as a "short code" and route the message directly to the application 10. In this way, mobile devices are able to send messages to applications that are attached to their home SMSCs using "short codes".

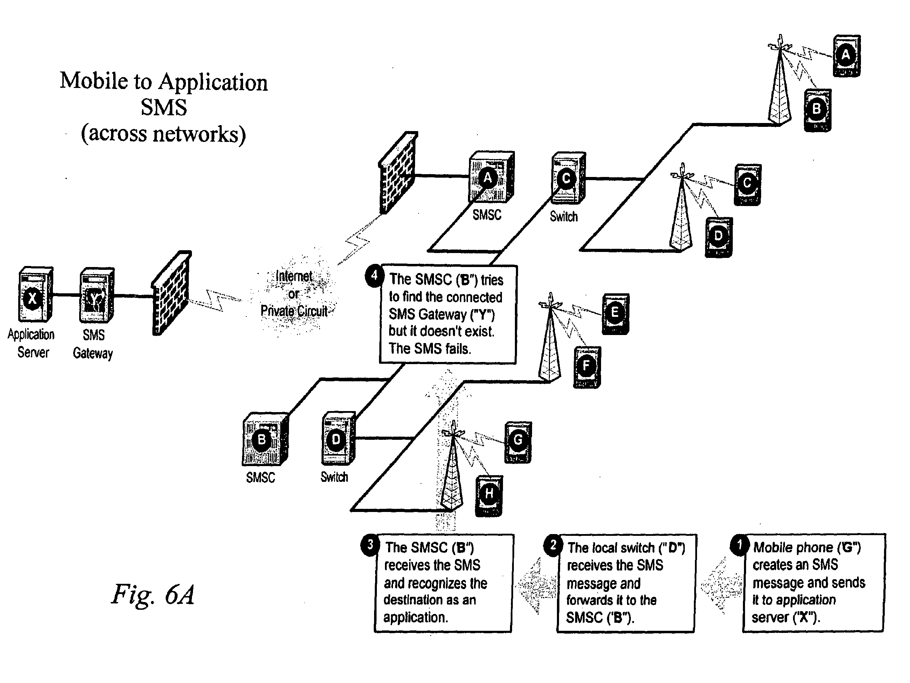

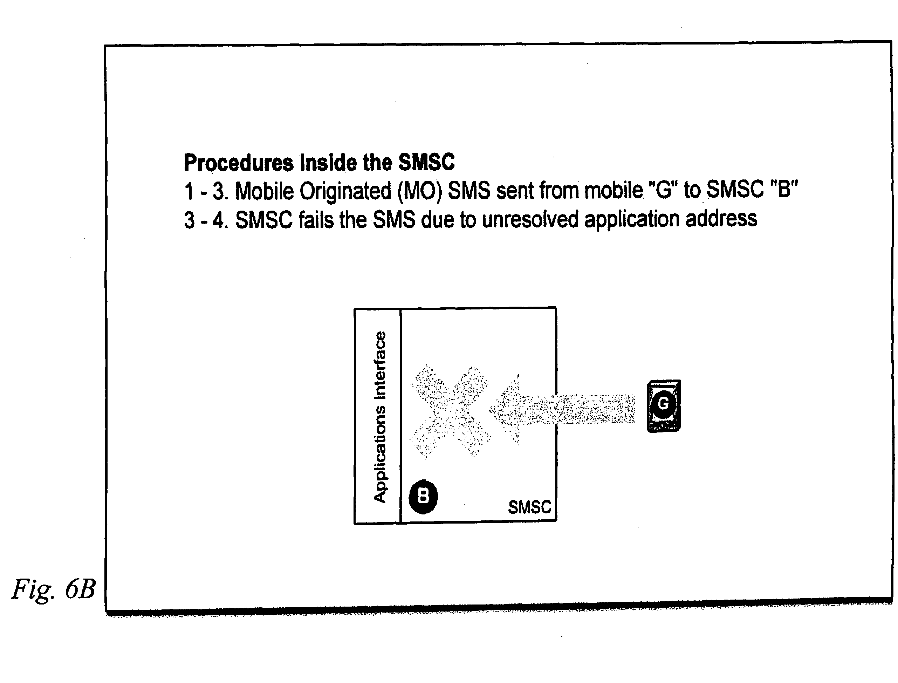

However, as can be seen from Fig. 6, it is not possible for mobile-to-application messaging to occur across networks using the "short code" system (and there may even be problems within a single network if there is more than one SMSC). The "short code" for a particular application is local to the SMSC that the application is connected to and no routing is performed or can be performed based on short codes to other SMSCs. By way of illustration of the limitations, we consider a mobile device from one network 26 trying to send a message to an application 10 connected to an SMSC on another network 13. The message is sent via the base station 25 and the MSC 24 to the originator's home SMSC 23. This SMSC 23 does not recognise the recipient's number as an application "short code", as the application is not connected to that SMSC and the message delivery fails. Worse, an SMSC may coincidentally recognise a short code and deliver the message to a local application other than the intended application but which has locally been assigned the same short code. Solution of this problem would potentially require both a connection to all relevant SMSCs (potentially every SMSC globally) and organisation to ensure that all applications are allocated consistent short codes (which by virtue of being "short" are in limited supply) by all SMSCs.

As discussed earlier, using the "reply-by-same-centre" provision, an attempted solution has been proposed to alleviate the problem whereby it may be possible to allow SMEs on any network 26 to reply to messages sent by an application 10. When an application 10 sends a message to an SME on another network 26, a flag embedded in the message can temporarily change the SMSC identifier in a user's telephone so that when the user 26 sends a reply to the message, that message is sent directly to the SMSC 13 of the application rather than the message being sent to the mobile user's home SMSC 23. In such a case, the SMSC can deliver the message to the application using a short code. However, it will be appreciated that the message will not be processed by an SMSC on the home user's network which may cause problems (for example if billing is performed on the home SMSC). Also, this requires the mobile device to be reconfigured temporarily and to send messages across networks directly. Both of these may cause problems for network operators and thus use of the "reply-by-same-centre" provision is problematic and has been blocked by some network operators.

A further problem with both solutions (even for messages within a network) is that applications may attract large peaks in the volume of SMS traffic. This may occur when many mobiles send messages to one application at approximately the same time; for example, if users are prompted by a broadcast (e.g. on a television show) to send messages to an application. In order to cope with such spikes, large and expensive busy hour licences for the SMSC must be purchased and an SMSC must be able to cope with peaks of much greater traffic than is normally required in the steady state. If the SMSC becomes overloaded, significant network problems can arise. Furthermore, there will normally be a physical limit on the number of application connections to an SMSC. This may mean that there is little scope for redundancy in this prior art system since, due to the limited number of connections available, an application may have only one connection to one SMSC in each operator network.

### Preferred embodiment

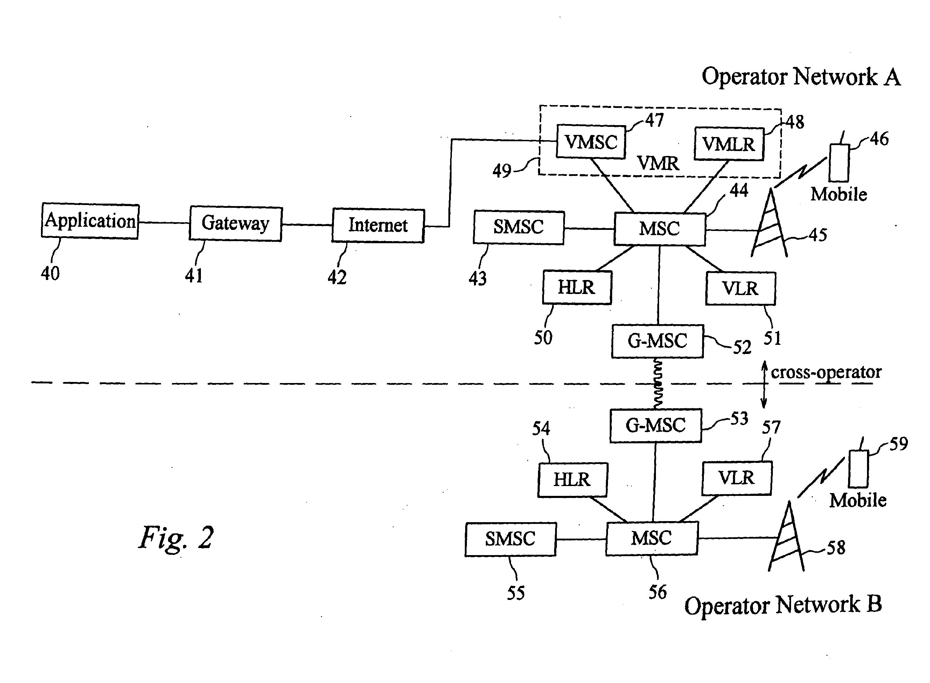

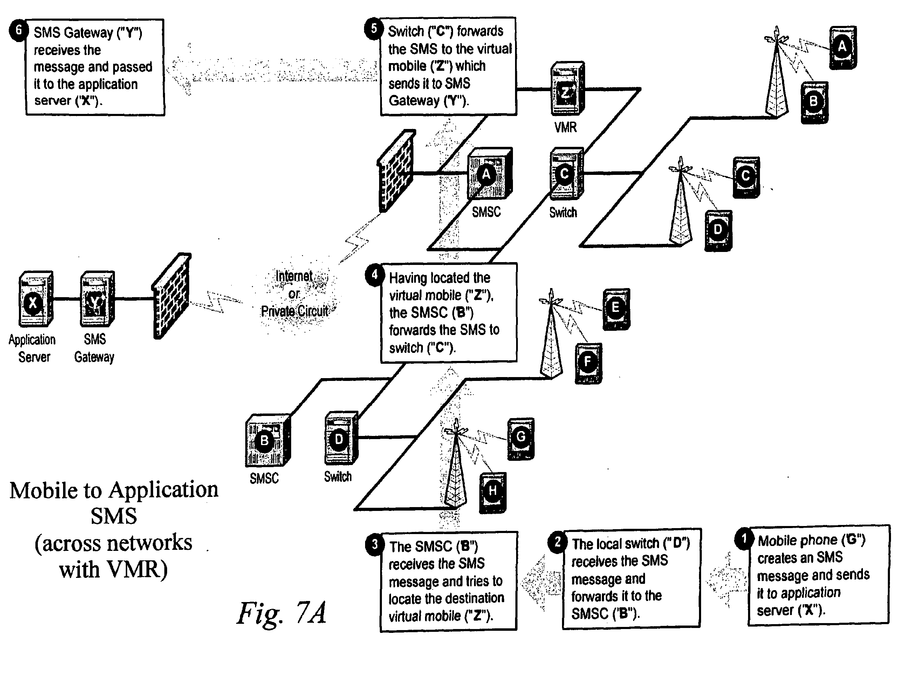

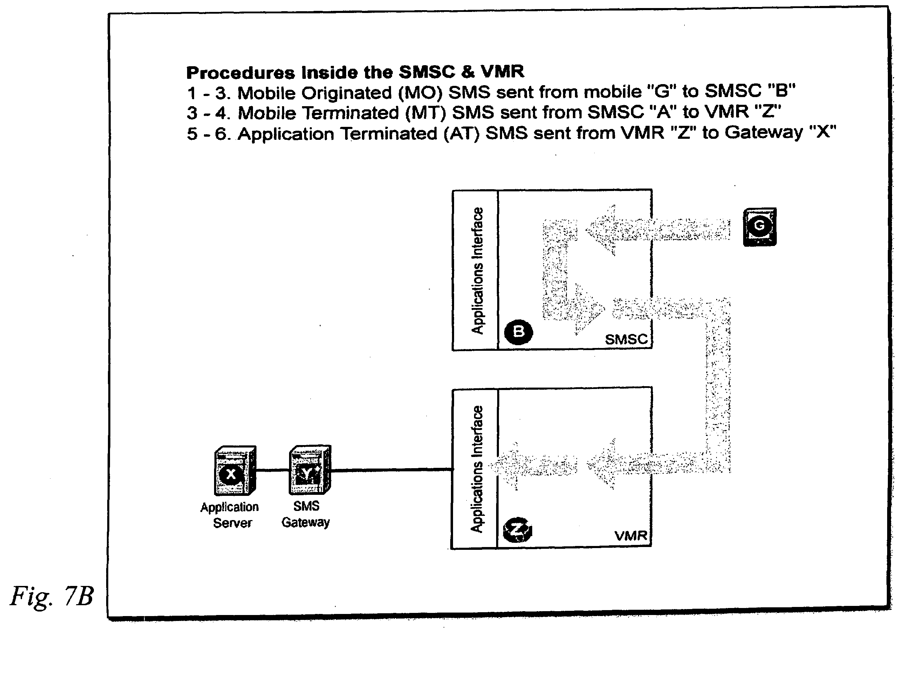

A preferred embodiment of the invention will now be described in more detail, with reference to Figs. 2 and 7.

In outline, this embodiment acts as a virtual mobile for the application, intercepting messages directed to the virtual mobile numbers and routing them to the corresponding applications. By acting as a virtual mobile rather than a conventional application having a short code, the routing facilities of the network may be used advantageously but by intercepting messages, the limitations of a physical mobile (connected via a dynamic connection over the air interface) may be avoided.

In a preferred embodiment, the application may be a software component having the capability to send and/or receive SMS messages. As will become clear, the embodiment is particularly advantageous for applications that receive large volumes of SMS traffic.

In overview, an embodiment may incorporate at least one component which is here termed a "Virtual Mobile Location Register" (VMLR) by way of analogy with an HLR.

This contains the location and routing information necessary to direct messages sent to virtual mobile numbers to their corresponding applications. The embodiment may also incorporate at least one component here termed a "Virtual Mobile Switching Centre" (VMSC), which acts as an MSC for the at least one application, providing a connection between the mobile network and the application(s) that correspond to the virtual mobile numbers managed by the VMLR and preferably bypassing an SMSC. In this embodiment, the combination of the VMLR and the VMSC are together termed a "Virtual Mobile Redirector" (VMR).

A description of the operation this embodiment now follows with particular reference to Figure 2 and also to Fig. 7.

This embodiment can be used to route messages across a network from a mobile device to an application. In this embodiment, the network is a GSM network, but, as explained above, in other embodiments, a similar arrangement may be used in alternative networks, such as a 3G network.

In accordance with this embodiment, an SMS message, created by a user of a mobile telephone 59 on a first operator network, can be routed to an application 40 connected to a second operator network, with only the second operator network requiring modification by incorporating a VMR, 49.

An application is assigned an identifier which corresponds to an MSISDN number within the domain of operator network A. Thus, regardless of where a message originates, the originating network will attempt to route the message to what appears to be a mobile device in network A.

By way of example, a message is sent from mobile device 59 in operator network B, via the base station 58 and the MSC 56 to an SMSC 55 on the user's home network. The SMSC 55 sends a "Send Routing Information" request to request routing information from the location register for the device to which the message is addressed. The destination will appear to originator SMSC 55 to be a mobile such as mobile 46 in network A and the routing information request will initially be routed across the network through the GMSCs 53 and 52 to the second operator network, to which the VMR 49 is connected. However, rather than passing the request to the HLR 50 which contains real mobile information, the MSCs 44 in Network A are configured to pass the request to the VMLR 48, which, in this embodiment, is a component of the VMR 49.

The VMLR 48 provides routing information to the requesting SMSC 55 which directs the message to the VMSC 47 attached to the application. The sending SMSC then attempts to deliver the message to what appears to be a mobile device using the VMSC 47 and the VMSC receives the message, terminates it in the manner that a mobile device would, and passes the content on to the application. In this way, the message is delivered to an application as a message to a mobile would be delivered, irrespective of the source of the message. It will be appreciated that, although the message in this example originated from a mobile device in network B, it could of course have originated in the same network A as the VMR and could have originated from an application.

The embodiment may include further advantageous features. It will be appreciated that connections to mobile devices may be subject to interruption, for example if a user is out of coverage or if the device is switched off. Location or routing information normally indicates availability as well as route to last known destination. Furthermore, even if a mobile has been indicated to be available, it may not be possible for an MSC to connect when an attempt is made to deliver a message. The features of mobile networks which handle such events can be exploited to advantage in preferred embodiments.

On receiving a request for routing information, the VMLR can determine whether the application is available (it may be busy, overloaded or not functioning) and can signal that it is not available even if a physical connection exists. If the application is deemed to be unavailable (in accordance with defined criteria such as load), the VMLR 48 responds to the "Send Routing Information" request by informing the SMSC 55 that the receiving device is not available to receive messages at that time. The SMSC 55 either tries to send the message again after a short interval or sends a message failure report for the message to the message originator 59. The VMLR 48 monitors the availability status of the application, and, in a preferred embodiment, sends a message to the SMSC to inform it when the application again becomes available to receive messages. The SMSC can then send the message to the application immediately, speeding up the process of message delivery. This aspect of the embodiment may take advantage of the Mobile Waiting Data (MWD) feature supported in many GSM operator networks.

As mentioned above, a message may be deemed undeliverable if either the receiving application or the VMR system is under extreme load and running low on capacity. In this case, the VMLR can throttle back the flow of messages from SMSCs in order to safeguard system stability. This is done, as in the case of unavailable applications, by returning the message back to the SMSC, forcing the SMSC into its retry schedule.

By way of background, the Mobile Waiting Data feature is part of the GSM standards and is implemented in many networks to allow messages to be delivered promptly to mobile telephones that reconnect after a period of unavailability. If a mobile telephone is unavailable when an SMSC sends a request for routing information to its HLR, then the HLR responds to the SMSC's request with a message to inform it that the mobile telephone is unavailable. The SMSC enters its message retry cycle in which it will wait for a predetermined length of time before trying to resend the message. The HLR records the identity of the SMSC that has a message for the telephone. When the telephone again becomes available, the telephone re-registers with the HLR and the HLR checks a list (an "MWD list") to see if it has any messages waiting for that telephone. If the HLR discovers an entry in its MWD list for a telephone, the HLR sends an SC alert to the relevant SMSC informing it that the mobile telephone is now available to receive the message. If the SMSC recognises this, the SMSC may resend the message immediately rather than waiting for the next retry cycle (which may take hours) before the message is delivered. A preferred feature of this embodiment is that the VMLR may store the identity of an SMSC attempting message delivery to the application. If delivery fails, the VMLR may send an SC alert subsequently to the SMSC when the application is available.

If the application 40 is connected and available to receive messages, then the VMLR 48 responds to the "Send Routing Information" request by providing the routing information necessary for the message to be routed to the VMSC that the application is attached to. The VMSC 47 receives the message from the SMSC 55 and terminates the message, sending a delivery confirmation message back to the SMSC 55. The VMSC 47 then creates an application terminated message and sends it directly to the application 40, optionally via a gateway, which may be used to provide an interface between the application and the mobile network. If the application has become busy, the VMSC may also reject the message.

Possible embodiments of gateways that may be used to connect an application to the mobile telecommunications network are described in more detail below.

In one embodiment, the gateway connects at least one application directly to at least one SMSC in at least one mobile operator's network. This may allow the application to send SMS messages to entities on the mobile network and to receive messages from mobile entities on the at least one operator network to which the gateway is connected, as described above. One function of the gateway in this situation may be to provide a connection between the proprietary interface of the SMSC and the application, which may be connected to the gateway over a standard interface, such as an IP interface. The gateway may allow multiple applications to connect to each of the limited number of ports on the SMSC and may also provide security to the network operators by providing a firewall between the telecommunications network and the applications.

In a second embodiment, the gateway may connect an application to the VMSC of the VMR or to an Application Messaging Service Centre (AMSC). The AMSC is described in more detail below. This connection may be provided instead of, or in addition to, the connection to the SMSC described above. Connecting to the VMR or AMSC may allow applications to send and receive SMS messages to and from any mobile entity, regardless of the home network of that entity, as described above.

The operation and some features of two embodiments of gateways which may be used to connect applications to a mobile telecommunications network are described in more detail below. In this embodiment, the gateway is a software server that operates as a messaging transport enabler in a wireless data service offering. The gateway may facilitate the sending of messages from an existing, or a purpose-built application to the mobile network. This process may also be implemented in reverse for mobile users sending data from their devices to an Enterprise application or an Operator-hosted VAS. Applications that may connect to the gateway preferably include existing Enterprise applications (e-Mail, CRM, ERP and Workflow Engines), custom-built applications, or VAS (or other application servers) operated either externally or directly by a mobile operator.

As outlined above, the gateway may reside within the operator network and may be used to interface between an application and an SMSC of an operator network. Applications preferably connect directly to the gateway via a proxy interface using, for example, a TCP/IP connection. Once connected, data may be sent from the application, via the gateway, to the SMSCs of the operator. The gateway is therefore preferably compatible with a wide range of existing SMSCs, for example those produced by SMSC vendors such as CMG, Logica, Nokia, SEMA, ADC Newnet and Comverse. Multi-vendor operator environments are preferably supported. The gateway may transfer data to the SMSC via one of the SMPP, EMI/UCP, CIMD2, SMS2000 or OIS protocols, commonly used by mobile network operators. The SMSC connection may be managed within the ability of the individual connection protocol used. The gateway is preferably compliant with the telecommunications standard GSM 03.38 and is able to handle Alphanumeric (7-bit), 8-bit and UCS2 SMSC Encoding Types. Preferably, the gateway also provides support for the GSM Character Set and GSM Extended Character Set.

Preferably, the gateway acts as a firewall to the network core infrastructure, retaining overall network security. This may eliminate the need for new applications to be rigorously tested and verified before being connected to the mobile network.

An existing, or custom-built, application is preferably able to integrate with one of the client interfaces of the gateway via a proxy interface. Preferably, SMS applications may avoid having to use vendor specific protocols to interface with an operator's SMS infrastructure. The gateway preferably removes this barrier to entry for application programmers with a set of common APIs (Application Program Interfaces) (including SMPP (Short Message Peer-to-Peer protocol, described in more detail below)) that simplify development. Other APIs that are preferably supported include CIMD2, SMTP, SOAP (XML/HTTP), CORBA, POP3, Java Remote Method Invocation (RMI), support for SSL, JDBC, DCOM/Active-X, HTTP, HTTPS, IMAP and JDBC.

As outlined above, the gateway preferably enables multiple applications to connect to each input of the SMSC, VMR or AMSC, which may effectively remove the restriction on the number of applications that can connect to each operator network. The gateway preferably supports in excess of 10,000 application connections to the mobile network. The gateway also preferably provides SSL (Secure Sockets Layer) Support for application connectivity. SSL may be available for RMI (Remote Method Invocation), SOAP (Simple Object Access Protocol), HTTP (HyperText Transfer Protocol) and Proxy Communication between the application and the gateway.

The gateway architecture may be designed to provide scalability and reliability. The gateway architecture may be similar to that described below for the VMR and AMSC. Mobile network operators with two or more gateways may implement fail-over between the gateways to offer a high availability option for client connections. Operating systems supported by the gateway may include Microsoft Windows NT4/2000, Solaris 8.0, Linuxand HP-UX 11. Automated installation capabilities may also be provided. The gateway preferably also supports transport protocols such as TCP/IP, X.21 and X.25. The gateway preferably further includes persistence (crash recovery) capabilities. This may allow the gateway to recover incomplete transactions after failure.

The gateway preferably incorporates traffic management capabilities to allow for different capacity SMSCs and for applications that pass large volumes of traffic through the system in a short period of time. Preferably, the gateway has a capacity in excess of 1000 messages per second, although the gateway may operate at capacities of between 200 and 300 messages per second.

The gateway may also provide channel grouping capabilities, wherein a number of SMSC connections may be grouped together. The number of SMSC channels supported may be unlimited. Channel traffic balancing may also be provided to distribute the message load between SMSC connections within a group, or between groups of connections. Preferably, the gateway dynamically distributes message load amongst channels within a group. In addition, messages may be routed to a specific group of SMSCs (a specific channel group).

Channel throttling capabilities may allow the gateway channel speed to be matched to the SMSC speed (where the channel speed defines the maximum number of messages that may be sent to a particular channel each second). If messages are received at the gateway at a faster rate than they can be delivered (either to the SMSC or the applications), the messages may be queued for later sending. The messages may be queued in order of receipt, or messages may be prioritised according to predetermined rules. In this way, higher priority messages may bypass lower priority messages.

Further gateway features may include message filtering to allow whitelisting/blacklisting of mobile numbers or groups of mobile numbers. Support for custom filters may also be provided. Unicode International Language Support may be provided if the server operating system and SMSC support the character set.

Preferably, the gateway allows the transmission of a wide range of message services, such as rich content Enhanced Messaging Services (EMS) and Nokia Smart Messaging 3.0. This may be implemented through the use of JAVA classes and messages may be transmitted via RMI. In addition to supporting 2-way text messaging, the gateway may also support binary messaging and provide access to the User Data Header (UDH).

A further preferable feature of the gateway is the capability to provide Mobile Originated SMS (Mobile Pull) services. This enables mobile phone users to access data on demand.

The gateway preferably provides logging facilities. These may be file-based (archived) or RDBMS (Relational Database Management System) (preferably JDBC compliant (Java Database Connectivity)). Details stored in the log are preferably configurable. A web interface, which allows for easy configuration and management and which may be customizable, is also preferably provided to allow account management and the provision of billing records for messages sent and received. All message events may be logged for billing purposes. Custom billing formats may also be provided to application operators. A command line interface or console output may also be provided for account management. Account management may also be provided through custom integration to a 3rd party CCB system. Authentication capabilities on the control interfaces or the message sending interfaces may be used to restrict access to authorised users only. A variable tariff system may allow allotments based on different tariffs to be assigned concurrently. A graphical application, such as "TestSpeed" may also be included for benchmarking gateway performance.

A further preferable feature may allow multiple MSISDN support wherein one or more MSISDNs may be mapped to a particular client account. Preferably, SNMP (Simple Network Management Protocol) and CDMP (an SMSC protocol) capabilities are also provided. Preferably, channel routing is also implemented to provide Cheapest/Fastest Route Negotiation.

It may also be preferable to allow a GSM modem to be connected to the gateway for the purposes of evaluation, demonstration and testing, negating the requirement for direct SMSC connectivity at that stage.

One embodiment of the VMR will now be described with reference to Fig. 2 and Fig. 7. The VMLR and VMSC; which make up the VMR in this embodiment, can be integrated into a single component but are preferably distributed to improve fault tolerance. Preferably, the VMSC and VMLR communicate with each other over a link other than the telecommunications network, for example an IP network. The VMSC advantageously feeds back information concerning the state of the application to the VMLR.

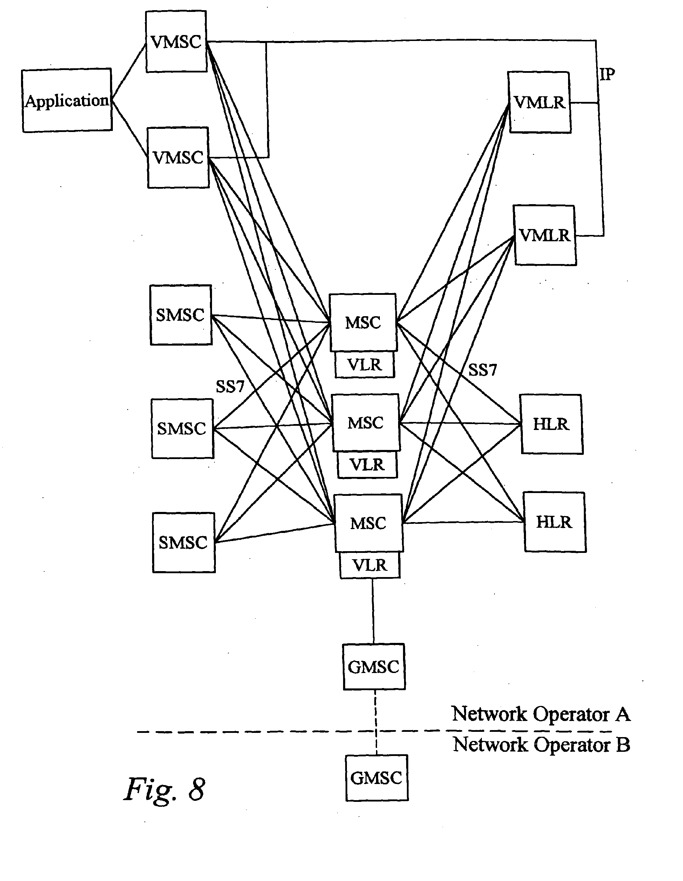

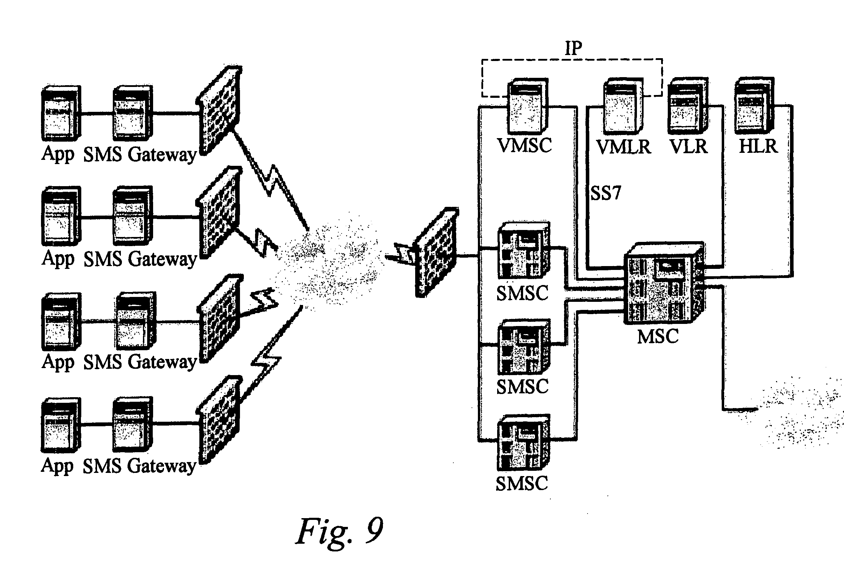

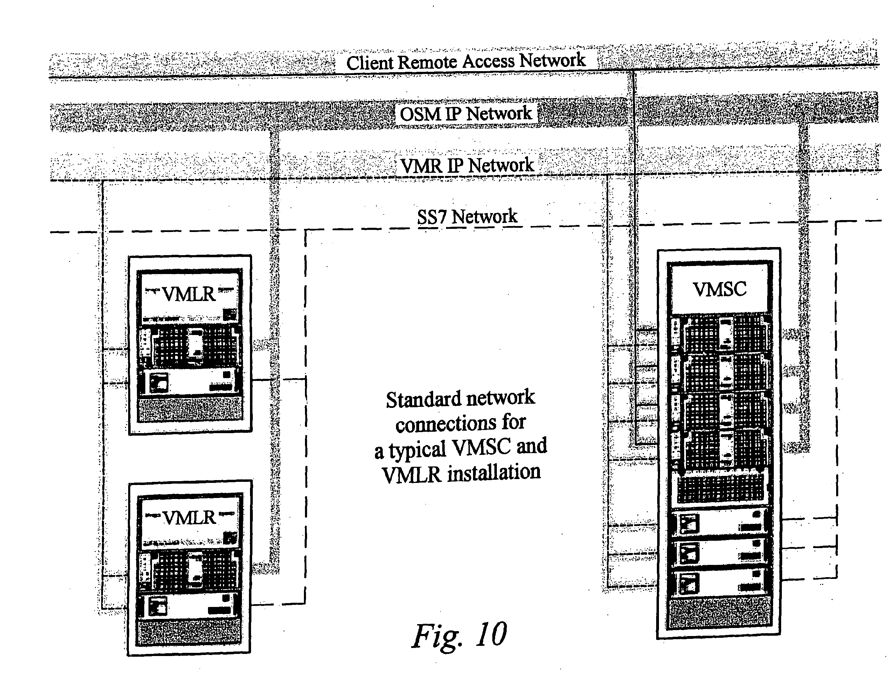

The VMLR 48 is shown in this embodiment as a separate component in the mobile network, but, in another implementation, the VMLR 48 could be integrated into the network HLR 50 (this reduces hardware requirement, but may increase load on the HLR). Communication between a VMLR and VMSC and distribution of components will be explained further with reference to figs 8 - 10. In a preferred embodiment, the invention incorporates more than one VMLR and the VMLRs are preferably connected over a separate data transfer link, such as an Internet Protocol (IP) network. This IP network means that more than one location register can store the routing information for each application, even if the VMLRs are geographically remote. If routing information for an application changes, for example, if an application goes offline, then the information in each of the VMLRs can be updated across the IP network. This provides an advantage over the prior art system since more than one VMLR can provide routing information for the application to supply in response to a request from an SMSC of the telephone network. Replication of VMLR data also introduces redundancy into the system and increases system fault tolerance. It is important to note that this is a somewhat unexpected departure from prior art systems where there must only be a single logical version of the data stored in an HLR (even if there is some hardware redundancy in the physical store) as there is only one real mobile device and the data changes frequently.

A further feature of the preferred embodiment is the Virtual Mobile Switching Centre (VMSC). This acts as an MSC for the applications that correspond to the virtual mobile numbers contained within the VMLR. Preferably, the system comprises more than one VMSC, with the VMSCs connected to each other and to the applications over the IP network. The VMSCs are also preferably connected to the VMLRs using a separate network, preferably an IP network. If the invention is implemented in this way, it affords a major advantage over the prior art system. In the prior art system, the MSC and the HLR communicate over the SS7 layer. When compared to communicating over IP channels, SS7 bandwidth is limited and expensive. Using an IP network (or another network separate to the mobile network) for communication between the VMLR and VMSC thus facilitates communication between the network elements and frees signalling bandwidth on the SS7 layer.

If an application is also connected to the network of interconnected VMSCs, for example over the IP network, which, in one implementation, could be the internet, then it becomes possible for more than one VMSC in the network to receive and redirect messages to the application. The VMLR may select routing information based on the availability of a plurality of VMSCs (and optionally other criteria such as distance to the VMSCs) and supply routing information accordingly to balance load between functioning VMSCs and to provide tolerance of faults of individual VMSCs.

In this embodiment, the application is connected to a VMSC and therefore does not need to connect to an SMSC in the operator network to receive messages. This alleviates the problems associated with using a proprietary interface to connect the application to the SMSC and the problem that an SMSC typically only has a limited number of ports to which applications can connect. It also means that messages intended for the applications are not routed via the SMSC. This is advantageous to both the SMSC operator and the application owner, as application messages tend to pass through the network in spikes of traffic. For example, a large volume of traffic is generated if many mobile users wish to send a message to an application simultaneously and a large amount of traffic may even cause components such as the SMSC to fail.

A further preferred feature of the VMSC is that it is capable of implementing a "reverse bind" process. This means that, if a message is sent to an application that is unavailable to receive messages, the VMSC can attempt to connect to the application in order to deliver the message.

Bypassing the SMSC is also advantageous to the application operator as the operator will not need to purchase a large busy hour licence to receive messages through the SMSC. Busy hour licences normally restrict peak throughput. However, using this embodiment, the applications no longer need to receive burst of messages through the SMSC, and the message sending rate can be controlled. This means that a smaller busy hour licence can be purchased.

It will be noted, however, that in this embodiment, the application may be connected to the SMSC to send outgoing messages. In such a case, the application is preferably configured to give the MSISDN number to which it is assigned in the VMLR as an originator number so that incoming messages are sent via the VMR. Since the outgoing messages can be sent at a timing determined by the application, the peak throughput can be controlled. In an alternative embodiment, the VMSC may incorporate message sending capability so that the SMSC can be omitted completely from the application connection.

In a preferred embodiment, the VMLR and/or the VMSC have an SMS message throughput capability at least as great as the interface to the core mobile network. This means that the throughput rate of messages in this embodiment is limited by the throughput rate of the interface to the mobile network and problems caused by spikes will not cause failure of the VMLR or VMSC.

The VMSC itself is preferably connected to one of the MSCs on one of the telephone operator networks. It thus becomes part of the switching technology of the telephone network and is accessible, through operator interconnect agreements, from anywhere on the telephone network. For many of the reasons outlined above, it is advantageous for the VMSC to be connected to a switch in the telephone network and not to the SMSC and so not to forward messages from the network through the SMSC to the application.

In one embodiment of the invention, the VMLR network element and the VMSC network element together form the Virtual Mobile Redirector (VMR). The function of the VMR is to facilitate the transfer of messages between SMEs and applications by presenting a virtual mobile number to the network for each application and redirecting messages sent to those numbers to the corresponding applications.

In the preferred embodiment, the VMLRs and VMSCs are all interconnected by a data transfer network separate to the mobile network, such as an IP network. This means that every VMLR has access to location information for all of the applications connected to the VMSCs; therefore, each VMLR is capable of providing routing information for any application. This means that, when a routing path is requested by an SMSC trying to deliver a message to an application, any VMLR can respond to the "Send Routing Information" request by supplying the appropriate routing information. Since, in this embodiment, the VMSCs are all interconnected by a network separate to the mobile network, such as an IP network, the message can be routed to the application via any of the VMSCs. It is therefore possible for the VMLR to select the route it provides to the SMSC using an algorithm that calculates the best route to the application based on predetermined factors. These factors are not limited to but may include criteria such as a measure of the geographical proximity of the VMSC to the SMSC requesting the routing information. The measure of geographical proximity may be a measure of the physical distance between the network elements, or it could be a measure of the distance between the elements over the network, for example, the number of switches (MSCs) between the SMSC requesting the information and the VMSC. This geographical proximity criterion is useful since it allows the VMLRs to preferably route messages off the SS7 layer and onto the separate network connecting the applications to the VMSCs as close to the originating SMSC as possible. For example, requests for routing information originating from an SMSC in the North of a country could preferably be routed to a VMSC in the North of a country. Similarly, requests from an SMSC in the South of a country could preferably be routed to a VMSC in the South. In this way, messages are transmitted a shorter distance on the expensive SS7 bandwidth.

Other predetermined criteria used by the VMLR to determine the best routing information to provide to the SMSC could include the availability of the VMSCs, which may be assessed by measuring the load on each of the VMSCs.

A plurality of criteria such as those described above is preferably incorporated into an algorithm to allow the VMLR to determine the best routing information to supply to the requesting SMSC. Such an algorithm preferably includes weighting factors based on the relative importance of each criterion. An example might be that the availability of the VMSCs is considered more important than their geographical location, and these criteria would be weighted accordingly within the algorithm.

Thus the preferred system can perform both load balancing and.proximity balancing on the VMSCs to maximise the throughput of messages to the applications. This would not be possible in a prior art network.

The interconnection of VMLRs and VMSCs over a network separate to the mobile network also provides a level of hardware and software redundancy in the system. This may mean that graceful degradation can take place if some of the system components fail; the system retains full functionality, although at a reduced capacity, if some of the components fail.

In the preferred embodiment, the hardware is designed around a distributed "N + 1" implementation model. This means that the hardware is comprised of many small elements. More than one element is capable of performing the a particular task at any time, so if any of the hardware fails, other hardware elements are able to take over their roles.

The software implementation of the VMR could take many forms, but in one embodiment, the invention is implemented using a distributed software architecture. Individual software elements, or agents, each performing a single simple task, are controlled by a management system, or wiring. The wiring ensures that the correct agents are connected to allow the VMR to perform the tasks that comprise its functionality. New agents can be introduced to the system by the wiring and agents that are not functioning can also be removed or replaced. This allows the system configuration to be upgraded in a live environment since any new agents that are introduced and that do not function appropriately cause the wiring to roll the system configuration back to the last known good configuration, minimising disruption. This live configuration mechanism, and the software redundancy, ensure that the system retains full functionality even if some of the agents fail.

A further advantage of this embodiment of the invention, using distributed software and hardware technologies, is that they can provide just-in-time scalability. As demand for the system grows, new hardware components can quickly be added to follow the growth in demand. This provides an advantage over conventional systems, which must add large hardware components and reconfigure software to incorporate the changes. This leads to periods of over-utilisation of the system, before the new hardware is added, followed by periods of under-utilisation when the new hardware has been added but demand has not yet grown to utilise the hardware to its full potential.

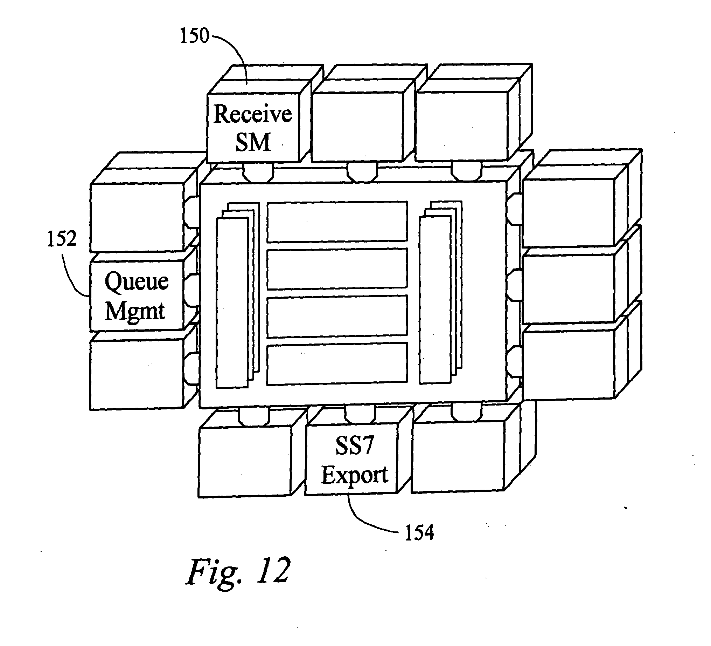

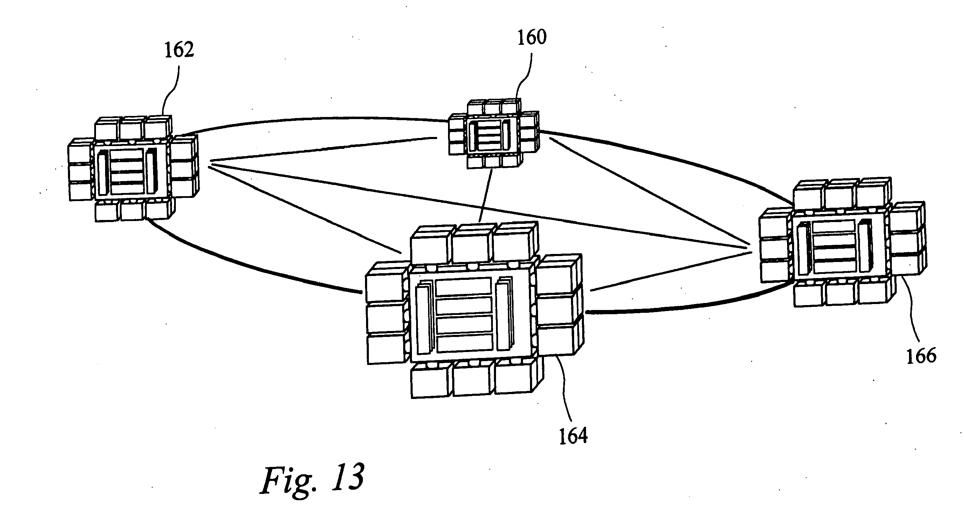

The architecture of one embodiment of the VMR is described in more detail below and is illustrated further in Figs. 12 and 13.

In one embodiment, as illustrated in Fig. 12, the VMSC and VMLR both share the same distributed architecture. Unlike traditional SMS infrastructure, this platform may be completely modular using software redundancy, replication and distribution. Each logical node may be made up of several medium to small systems that are redundant and scalable. Examples of such systems include the "Receive SM" 150 "Queue Management" 152 and "SS7 Export" 154 nodes illustrated in Fig. 12.

Message queues and processes (agents) can be spread across all of these systems while management agents or a management system controls their activity and distribution.

Agents and queues may be replicated throughout the node, minimizing the possibility of a single point of failure. In this embodiment, the self-healing distributed internal messaging system is capable of detecting and correcting faults without operator intervention. In the case of a system failure within a node, management agents may take immediate corrective action to resume normal operations as quickly as possible. This means nodes may still be available to provide a nearly full level of service even in the event of multiple failures. In multi-node installations, queues can be replicated across entire nodes to minimize the potential impact of site failures.

In this embodiment, the same architecture may be deployed throughout all VMSC and VMLR nodes. It may provide the advantage of allowing for smooth just-in-time expansion that is simple and quick to complete. There may be no need for overhaul, major reconfiguration, or changing hardware. Capacity increases may be managed simply by adding additional servers to the configuration. When new components are introduced to the system, the agents and other components may be redistributed to take advantage of the extra capacity. In addition, nodes can share resources and tasks making them a very efficient way to expand rapidly.

The modular design of the VMR may provide the ability to introduce new functionality to the general architecture without major overhaul or redesign. Management agents may be used to ensure that new components do not interfere with operational functions so they can be introduced into live systems without downtime.

Features incorporated into the design of the architecture of the VMR enable it to provide SMS services for applications in an efficient manner. An example of this is the VMR's ability to cope with large transient spikes in service without system degradation. This may be done through special dynamic queue optimization. Further attention to the requirements of management and operations provides ease-of-use features like centralized configuration for both the VMSC and VMLR and different access levels for account creation.

Further redundancy may be provided by the use of multiple VMR nodes 160, 162, 164, 166, as shown in Fig. 13. These multiple nodes may provide further resiliency and flexibility to the VMR system.

An additional feature of the preferred embodiment is that messages within the message store of the VMR that are being stored before transfer to applications, or the network, are replicated to a constantly updated replicated message space. This is another feature that is made practical by the separate data transfer link connections within the VMR.

A further feature of the preferred implementation is that it may incorporate a system to monitor the availability of the applications connected to it. The VMLR can frequently update its location register for the status and location of applications attached to it. The frequent updating of multiple VMLR records across many different interconnected VMLRs is made feasible by the separate data transfer links by which they are connected.

Applications may become unobtainable temporarily (for example, if their link to the internet fails) or permanently (if the application is withdrawn from the system) and messages will not be sent from the SMSC to the application via the VMR until the application becomes available again to receive the message. This means that messages are stored in the originator's SMSC until the application becomes available, so the messages do not need to be stored for the application by the VMR. As a consequence, the VMR does not require large amounts of storage memory.

In the preferred embodiment, when an application again becomes available to receive messages, the VMR can notify the SMSC, which can then try to resend the message immediately. This aspect of the embodiment takes advantage of the Mobile Waiting Data (MWD) feature incorporated into many operator networks.

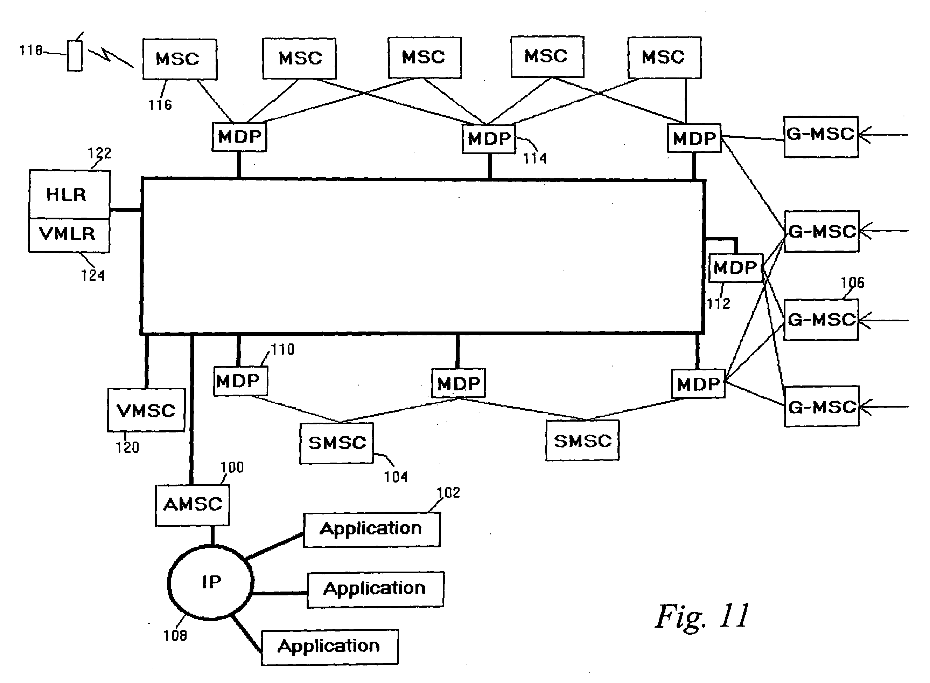

As discussed above, a further embodiment of the present invention may incorporate means for sending application originated (AO) messages from an application to the mobile network. One embodiment of the invention which incorporates this function will now be described in more detail with reference to Fig. 11.

In this embodiment, the network incorporates both a VMR (a VMSC and a VMLR) and an Application Messaging Service Centre (AMSC) 100. The AMSC may comprise all of the features of the VMR and may provide further functionality for an application 102, or External Short Message Entity (ESME), accessing a mobile network, as described below.

In this embodiment, the AMSC 100 provides means for routing mobile (or application) originated messages from the mobile network to the application 102, as described above for the VMR. The AMSC 100 may also incorporate all or some of the features of the VMR described above.

In this embodiment, the AMSC 100 further provides means for sending messages originated by an application 102 attached to the AMSC to other entities on the mobile network. By way of example, the application 102 generates a short message and sends it to the AMSC 100 over an IP network 108. The AMSC 100 receives the short message from the application 102 and processes the message in a similar way to that in which the home SMSC of a mobile device would process a message sent to it from a mobile. This is described in detail above and is readily applied to the AMSC, which is able to determine the destination address of the message and send out "Send Routing Information" requests in order to obtain the routing information for the destination device to which the message may then be sent.

The AMSC 100 may provide full support for GSM phase III networks as described in the GSM standard 3GPP 29.002 for the Gd interface. In addition, the AMSC 100 may provide an interface to the application over a standard protocol, such as the Short Message Peer to Peer protocol version 3.4 (SMPP 3.4) ESME interface as defined by the SMS Forum (formerly the SMPP Forum).

As with the VMR, the AMSC 100 assigns an MSISDN (Mobile Station ISDN) number to each of the applications 102 attached to it. This number uniquely identifies the application 102 as an entity within the mobile network. It provides an address via which messages may be sent to the application from the home mobile network or any network interconnected to the home network via the gateway MSCs 106. Using MSISDN identifers for each application means that the mobile network can treat the application as another mobile station, as if it were a mobile telephone. This means that the mobile network does not have to be modified to incorporate the application and can route messages to and from the application using standard procedures.

In one embodiment, messages are not sent from the AMSC 100 to Short Message Entities (SMEs) 118 on the mobile network until routing information has been received and the destination SME 118 has confirmed its availability to receive the message. This may mean that messages must be stored in the AMSC 100 for later transmission. In this case, the AMSC 110 may use an intelligent media hierarchical message store. A memory persisted database may be combined with a magnetic disk to provide optimal message storage capabilities. Memory persistence may be supplied by a memory-based database and is used for very fast data throughput. The database may be used when messages are passed quickly through the AMSC 100 from the application 102 to the destination 118. If the data needs to be stored for later delivery, for example if the destination mobile entity is unavailable to receive the message immediately, the hierarchical storage system may transfer the message from persisted memory to magnetic media for longer-term storage.

In one embodiment, a further feature of the system may be distributed Message Delivery Points (MDPs) 110, 112, 114, which may be attached to SMSCs 104 and G-MSCs 106 of the mobile network. The MDPs 110, 112, 114 may be connected to each other to the AMSC 100 and to the VMR (VMSC and VMLR) over a distributed IP network 108, separate to the mobile network. The function of the MDPs is to offload SMS messages from the operator's mobile network to which they are attached and onto the IP network 108 at the earliest possible point. For SMS traffic that originates on the home mobile network (on-net traffic), this earliest possible point is at the home SMSC (for example, SMSC 104) of the SME that sent the message. For messages that originate on the mobile networks of other operators (off-net traffic), the earliest possible point is at the G-MSC (for example, G-MSC 106) via which the message reaches the home mobile network. Similarly, for outgoing messages originating at an application 102 attached to the AMSC 100, the message may be transmitted from the AMSC 100 over the IP network 108 and via an MDP 110, 112, 114 to the servicing MSC 116 for the destination mobile 118, or to a G-MSC 106 for transmission to a mobile on another operator's network.

The architecture of the AMSC 100 may be similar to that of the VMR outlined above and may provide many of the same features. It is designed to be robust and provide high-availability of the system. Multiple hardware and software nodes may provide a capability for graceful degradation in case of hardware or operating system failure. Increased fault tolerance may be provided by the use of alternate routes, the use of distributed agents and MDPs 110, 112, 114. The AMSC may also provide geographical and availability load balancing capabilities, as described above for the VMR.

In one embodiment, the AMSC also provides SMSC Blacklisting facilities which enable the AMSC to reject messages sent to applications connected to the AMSC from specific SMSCs, or ranges of SMSCs. This may be done on a system-wide basis and may provide a method by which the AMSC may, for example, block messages sent from other operator's networks. In addition, the AMSC may be able to block the sending of messages from applications to specific mobile stations, or groups of mobile stations on the network. Hence applications may be blocked from sending messages to, for example, barred mobile stations. A bar may be imposed on a mobile station by the network operator to which the mobile station is connected. This may be done on the request of the mobile station user in order to prevent messages being sent to the mobile station from a particular application.

The AMSC may further provide advanced ESME provisioning, which may allow the AMSC to disable/enable specific features for individual users who may require a more specialised service, or for those users who may be restricted to a more limited service. Such features may include the use of SMPP 3.4 "Outbind", windowing, enhanced messaging, etc. Subsets of features may be combined to provide particular level of service to a user or a group of users.

SMPP 3.4 "Outbind" is a procedure defined in the Short Message Peer to Peer Protocol Specification (v3.4). The procedure allows an SMSC to initiate the opening of a connection to an application (ESME), which may be used, for example if an AMSC has a message to deliver to a particular application. Windowing is a common feature of TCP/IP networks and allows the AMSC to control the rate at which data may be transferred to and from the ESME. Enhanced messaging functions include the capability of the AMSC to send formatted text, pictures, animations and sounds with the messages.

The AMSC may also allow the provision of voice service by the applications attached to it. These voice services may be voicemail messages, which may be used or produced by the application, or which may be stored for later distribution to mobile stations. The voice services may also include Interactive Voice Response (IVR) services, such as automatic ticket booking services, in which the application may respond to voice commands from a user.

In this embodiment, the AMSC may also provide support for high-density signalling on the mobile telecommunications network. This may allow the application to send and receive messages in a high density format and may facilitate the correct billing of these messages.

The AMSC may be tested and verified in order to ensure that it is capable of processing a given number of short message delivery processes per second. In one embodiment, the AMSC may be able to process up to 250 short message delivery processes per second. In other embodiments, the AMSC may be capable of processing up to 750, or 1000 short message delivery processes per second.

A high level functional description of one embodiment of the invention follows. This is not intended to limit the scope of the invention, but serves to provide further details of how one embodiment of the invention might be implemented. In the following description of an embodiment, the term VMR relates to the Virtual Mobile Switching Centre (VMSC) described above and the term HLR relates to a modified HLR which corresponds to the Virtual Mobile Location Register (VMLR) described above.

### Empower Virtual Mobile Redirector (VMR)

### High-Level Functional Description

### Contents

1. Purpose
2. Product Overview
3. Functional Components
4. Cross-Functional Components
**5. Virtual MS**
**6. Receive SM**
7. Message Store
**8. Deliver SM to Non-GSM Destination**
**9. CDR Generation**
10. Management
11. Service Levels
12. Compliance
13. Performance
**14. Security**
15. Architecture
**16. Glossary & Terms**
***(NOTE: Items shown in bold are defined in more detail in the glossary & terms section.)***
1. Purpose
   1.1. The purpose of this document is to serve as a high-level definition of the Empower Virtual Mobile Redirector (VMR). It outlines the main components and their basic required functionality. It will also define overall design goals for the product. The functionality defined in this document will be used as the foundation for the functional design of the product. The functionality will cover only the first major release.
2. Product Overview
   2.1. The VMR resolves issues surrounding the use of proprietary SMSC application address codes for two-way SMS applications. The SMSC application addresses are only valid on the SMSC for which they are present and therefore do not work across multi-network environments. The VMR resolves these issues by allowing the use of universal phone numbers for mobile to application messaging. This is done by presenting Virtual Mobile Stations (VMS) to the network and receiving their messages. Once captured, these messages can be passed to an application via an SMS Gateway. The VMR is built on a distributed fault-tolerant architecture that allows for high levels of scalability.
   2.2. Product Versions - The product name is designated with the speed rating of the system in messages per second after the VMR prefix. This document covers the specification of the base level product, the VMR-100 which has a maximum speed of 100 messages per second. Higher speed versions of the product may have variations in hardware and software but share the same integral architectural design.
3. Functional Components Overview
   3.1. Virtual MS - The VMR acts as the servicing MSC for designated virtual mobile stations and manages periodical location updates. Several ranges of standard MSISDN's can be allocated to this service.
   3.2. Receive SM - The VMR receives short messages addressed to any of the VMS from the SS7/C7 network and acknowledges delivery as if it had successfully forwarded the message to a real mobile station.
   3.3. Message Store - The VMR stores all messages in a queue until they can be delivered to their destination.
   3.4. Deliver SM to Non-GSM Destination - The VMR will pass messages to an ESME via SMPP or to a flat file on the local file system.
   3.5. CDR Generation - The VMR has the capability to produce ITU-T based Call Data Records (CDR).
4. Cross Functional Components Overview
   4.1. Management - The VMR provides SNMP management alerting capability and industry standard alarm interfaces. System management and configuration is done via a web management interface.
   4.2. Service Levels - The VMR is capable of providing 99.9% availability achieved by a distributed software and hardware architecture.
   4.3. Compliance - The VMR where necessary complies with ETSI standards for GSM Phase 2 mobile networks. The VMR uses protocol stacks tested and proven to work with GSM equipment from all major manufacturers. A complete list is available on request.
   4.4. Performance - The VMR is built on a scalable solution. With the correct hardware, each unit can be scaled to process more than 1,000 messages per second per unit. The entry-level system defined in this document is capable of 100 messages per second per unit.
   4.5. Security - The VMR does not allow anything to be introduced into the GSM network from non-GSM systems. The VMR requires the use of firewall protection on client-facing networks where appropriate.
   4.6 Architecture - The VMR is specified to run on NEBS compliant hardware. Protocol stacks provided by third parties are guaranteed for compliance to GSM standards specific vendor implementations. The system is capable of software and hardware load distribution and fault-tolerance.
5. Virtual MS
   5.1 MS Number Range(s) - Number ranges allocated for use by the VMR are called VMR MSISDN allocations. Once a VMR MSISDN allocation is set, VMR clients can be given one or more client allocations.
      5.1.1. VMR MSISDN Allocations - The VMR can work with number ranges varying in size from 100 to 10,000. The VMR has the ability to work with up to 100 number ranges. For each range defined, there is a designated HLR.
      5.1.2. Client Allocations - These are individual allocations for clients of the VMR. Each allocation can be one or more MSISDN's from a given network allocation.
      5.1.3. Number Management - The VMR web management interface is used for remotely updating and controlling the number ranges.
   5.2. Location Update - The VMR will interact with the HLR to provide the necessary location information for the specified number ranges.
      5.2.1. The address and other relevant information regarding the particular HLR is kept in the system configuration for each VMR.
      5.2.2. Virtual VLR - The VMR will be able to respond to any HLR messages on the D interface in compliance with GSM 09.02.
         5.2.2.1 VLR Update HLR - The VMR will update the HLR with location information for the virtual mobile station from time to time in compliance with GSM 09.02.
            5.2.2.1.1. Manual Refresh - An operator can force a location update to take place via the management interface.
            5.2.2.1.2. Periodic Update - The VMR can be set to periodically update/refresh the HLR data.
      5.2.3 Virtual Location Area - Each VMR acts as a virtual Location Area (LA).
         5.2.3.1 LA Change - If more than one VMR is deployed in the same PLMN, number ranges can be moved from one LA to another. This effectively moves the responsibility of the number range from one VMR to another.
      5.2.4. Location Update Throttle - In order to minimize the load on the HLR and interconnecting equipment, location updates are throttled to a setting suitable for the network.
      5.2.5. Location Settings - The VMR web management interface is used for remotely updating and controlling the location update settings.
   5.3. MS Present And Ready
      5.3.1. The VMR will update the HLR as necessary to assure that each MSISDN is presented as a present and ready MS capable of receiving SMS.
         5.3.1.1. The VMR will update HLR flags as required to make sure that new messages and waiting messages are delivered as quickly as will allow. This is done by using primitives Map Ready for SM, SM Memory Capacity Available, and effectively forcing the HLR to issue an SC Alert.
      5.3.2. Map Detach IMSI - Specific numbers or number range sub-sets can be taken offline manually for maintenance or other purposes. These numbers will appear as detached from the network (see 6.2.1.1.)
   5.4. Required Map Primitives - included but not limited to:
      5.4.1. D Interface - Map Send Identification, Map Update Location, Map Insert Subscriber Data, Map Delete Subscriber Data, Map Provide Subscriber, Map Cancel Location, Map Purge MS, Map Send Authentication Info, Map Ready for SM.
6. Receive SM
   6.1 The VMR will be able to accept delivery of Mobile Terminated (MT) messages acting as a servicing MSC in accordance with GSM 09.02 and GSM 03.40.
   6.2 Receive SM - The VMR will accept and process messages from MSC and G-MSC connections on the E interface in accordance with GSM 09.02.
      6.2.1. Failure Result
         6.2.1.1. Absent Subscriber - This is caused by the MSISDN being set off-line via the web management interface on the VMR which causes a virtual Map Detach IMSI. This will result with the equivalent of a paging request not receiving a reply when the next message to this destination is received. Messages can optionally be queued and logged on the VMR in this condition.
         6.2.1.2 Memory Capacity Exceeded - This is caused by an internal or client-related fault with the VMR resulting in the message not being delivered to its destination. This is used only in order to prevent a loss of data on the VMR. Messages are not stored in the VMR in this situation.
         6.2.1.3. Failure Recovery - When the fault is corrected or the MSISDN set on-line via the management interface, the VMR will issue a Map Ready for SM to initiate forwarding of any waiting messages.
   6.3 Required Map Primitives - Include but not limited to:
      6.3.1. Interface - Map Forward SM, Map MT Forward Short Message, Map MT Forward Short Message ACK
      6.3.2. C interface - Map Providing Roaming Number, Map Report SM Delivery Status.
7. Message Store
   7.1. The VMR queues message in a message store for processing and delivery.
      7.1.1. Mirroring - With one or more VMR's deployed in a network, queued messages can be mirrored to a remote VMR to protect them from loss in case of system failure.
8. Deliver SM to Non-GSM Destination
   8.1. Deliver SM to SMPP
      8.1.1. The specifications for the SMPP server interface are in accordance with the SMPP Organisation and in particular with respect to SMPP version 3.4.
      8.1.2. The VMR packages the message into a MO message-received event and passes it with the parameters unchanged to the appropriate connected SMPP client.
         8.1.2.1. Lookup Function - Each SMPP client is associated with one or more destination MSISDN's.
      8.1.3. SMPP Account Information
         8.1.3.1. The ESME client table holds information relevant to all accounts connected via SMPP.
         8.1.3.2. SMPP clients must remain connected to the VMR and must reconnect if disconnected.
   8.2. Deliver SM to Flat File
      8.2.1. The VMR will create a new file on a local file system containing the contents of the message and its parameters.
         8.2.1.1. When this file is successfully created, it will constitute a successful delivery and a return receipt operation may be initiated if requested.
         8.2.1.2. Flat File Settings - Each MSISDN set to redirect to flat file has its own settings for directory, file type, etc.
   8.3 Setting Redirection
      8.3.1. This is set individually for each number range.
   8.4. All three types of redirection can be used at the same time. Only one type of redirection can be used per MSISDN or MSISDN number range.
9. CDR Generation
   9.1. The VMR will generate Call Data Records (CDR) to the local file system. These call data records will contain all the relevant information about the message
   9.2. Format - By default the VMR includes all relevant information in the CDR. This will include originating MSISDN, SC number, time/date sent, destination MSISDN, account owner, billing plan.
   9.3. Creation - CDR's will be created when the message is successfully passed to the client interface.
   9.4. Access - CDR's will be written to the local file system for collection by billing systems.
      9.4.1. FTP - Parameters for this can be set in the web management interface.
   9.5. Capacity - The VMR can hold a variable number of CDR records (minimum of 1 million) depending on the configuration of the file system and physical storage.
10. Management
   10.1. Statistics - The VMR will provide near real-time and where possible real-time statistics to the web management interface and via SNMP.
   10.2. Alert Conditions/Monitors - Message store size, throughput, message failure limit, file system capacity, system capacity, CDR's created, CDR's not collected, flat files created, flat files not collected.
   10.3. Counters - Messages received, messaged failed, messages queued.
   10.4. SNMP - Statistics and alert conditions are available via SNMP.
   10.5. Alarms - Minor, major, critical alarms are reported through the alarm interfaces provided. The VMR provides for both hardware and software based alarms.
   10.6. Web Interface - The configuration of the VMR is done remotely via the web interface. Addressing, number ranges, redirection options, and lookup tables are managed via this interface.
      10.6.1. Restricted Access - Access to the web management interface is limited to accepted IP addresses and requires a username and password to access it.
      10.6.2. Network Configuration - Settings and monitors for multiple VMR's in one PLMN.
         10.6.2.1. Mirror Options - Settings for how each VMR replicates data to another VMR.
      10.6.3. System Configuration - Settings and monitors for each VMR.
         10.6.3.1. VMR MSISDN Allocations - A list of MSISDN's allocated for use by the VMR with associated parameters.
      10.6.4. User Configuration - Settings, monitors, etc. for the users of the VMR are configured in this section.
11. Service Levels
   11.1. Software and hardware used on the VMR is developed in such a way that critical systems are monitored and standby systems are available in the event of failure.
   11.2. The VMR is capable of delivering up to 99.9% up-time reliability.
   11.3. Remote Mirror- The VMR is capable of mirroring a remotely located VMR.
      11.3.1. Configuration Mirror - The VMR will replicate its configuration with a remote system.
      11.3.2. Data Mirror-The VMR will duplicate queued messages, and file system records including CDR's to the remote mirror.
      11.3.3. Split Load Mirroring - When used with a mirrored system, the VMR can sub-divide load of traffic.
      11.3.4. Mirror Fail Over - When one part of the mirrored system fails, new routing information is propagated to the appropriate MSC and HLR systems to point to the running portion of the mirror.
12. Compliance
   12.1. The VMR is designed to comply with all GSM and other relevant standards for hardware, electrical and signalling systems.
      12.1.1. The VMR complies specifically with GSM phase 2 mobile networks.
   12.2. The VMR uses 3^{rd} party systems for the implementation of SS7/C7 signalling and associated GSM protocol stacks. These have been fully tested with major equipment manufacturers and comply with all relevant standards and have a proven track record with mobile operators.
13. Performance
   13.1. The VMR is built on a scalable platform and is capable of being upgraded without major overhaul or replacement of hardware components. It is capable of taking from 4 to 64 SS7 links on one node. It is initially capable of working with up to 2 nodes per system. Each node can service from 100 to 1,250 messages per second depending on number of links, hardware size, configuration, etc.
14. Security
   14.1. Where the VMR interfaces to non-GSM systems, it is expected that these system would be isolated through the use of firewalls. The VMR will not allow anything to be introduced into the GSM network from non-GSM systems with the exception of receipts which are part of a process initiated within the GSM network.
      14.1.1. Web Interface
         14.1.1.1. The web interface is only to be used by authenticated users.
         14.1.1.2 External, remote access to the web interface should only be made via a firewall.
      14.1.2. The VMR will only accept IP traffic on expected ports and addresses. All other ports will be blocked.
      14.1.3. CDR collection - Facilitated via a firewall on a preset port and from a preset IP address.
      14.1.4. Flat File Collection - Facilitated via a firewall on a preset port and from a preset IP address.
15. Architecture
   15.1. SS7/MAP Interface
      15.1.1. The VMR uses solutions from Dialogic/Ulticom for the implementation of SS7 signalling and associated GSM protocol.
      15.1.2. Supported Switches - Ericsson AXE, Nortel DMS, Nokia DX, Lucent 5ESS, Motorola EMX, Siemens
         DCO, etc.
      15.1.3. Supported Regional User Parts - BTUP, SSUTR2, A-ISUP, etc.
      15.1.4. SS7 Card Based Solution
         15.1.4.1. SS7 protocol stack runs on card with software API running on host controller.
         15.1.4.2. PCI/cPCI form factor cards with the capability for hot swap and ail over with certain configurations.
         15.1.4.3. Supported host OS: Solaris, Linux.
      15.1.5. SS7 Chassis Component Solution
         15.1.5.1. Runs on SCO, Linux, Solaris, UnixWare.
         15.1.5.2. Units automatically fail over to each other and can optionally share the same point code.
      15.1.6. Fail Over / Load Balancing - The SS7 interface solution provides for the capability to load balance interfaces and to automatically transfer links in case of failure.
   15.2. Service Execution Environment
      15.2.1.1. Underlying Architecture - Loosely coupled distributed architecture. Provides complete scalability and resiliency though software.
         15.2.1.2. General Description - Transactions are performed by execution objects that interface to a high-availability database-driven message store in order to insert / manipulate / remove message objects. An example object would be one that listens for incoming messages via the MAP_FORWARD_SM primitive and inserts an SM message object into the message store. Management objects control workflow, monitor execution, and manage exceptions. Collection objects gather information from other objects and report statistics, etc. to management interfaces, log files and other output destinations. Each execution and management object can run together on one shared host or they can run on individual hosts or across several hosts. Multiple objects instances can be created for increased performance and scalability and provide capacity for fail over.
         15.2.1.3. Exception Handling - The execution environment of the VMR employs monitoring and workflow management objects that dispatch instructions to other objects in response to changing conditions on the system.
            15.2.1.3.1. Failure Recovery - When a critical failure occurs, dependent processes are suspended while the management objects report the event and take control to recover from the failure. The management objects will attempt to revive failed processes and will destroy and create processes as necessary in order to restore failed objects.
         15.2.1.4. Hot Upgrade & Reconfiguration -The execution environment allows for expansion and reconfiguration while the solution is in operation. This may be dependent on the nature of the changes and the installed configuration.
      15.2.2. Operating System - This can either be Solaris or HP-UX depending on the hardware that is chosen for the installation.
      15.2.3. Development API - The application logic for the VMR is written in Java and makes use of technologies like Jini for monitoring and high availability services such as mirroring.
   15.3. Hardware - Systems and servers are provided by and/or approved by Sun Microsystems, Hewlett Packard, and/or Compaq, TCP/IP networking equipment from Cisco is used where needed.
16. Glossary & Terms
   16.1.99.9% availability - Describes the percentage of time for which the system is operational and able to perform all of its primary functions without the loss of data.
   16.2. CDR - Call Data Record, a data file containing information regarding the activity of a subscriber used for billing purposes. Defined by ITU.
   16.3. ESME - External Short Message Entity, a term used to denote the an application connected to an SMSC for the purpose of sending and receiving SMS messages.
   16.4. ESTI - European Telecommunications Standards Institute, international body responsible for the GSM standard.
   16.5. HLR - Home Location Register, a database containing information about subscribers, their current status and location.
   16.6. GSM 03.40 - The ETSI specification for the point-to-point short message service.
   16.7. GSM 09.02 - The ETSI specification for the Mobile Application Part (see MAP).
   16.8. GSM Phase 2 - The Second major revision of the GSM specification.
   16.9. LA - Location Area, a logical grouping of base station cells and controllers.
   16.10. MAP Primitives - Functions defined in GSM 09.02 that define messaging instructions used between the major systems at the NSS level.
   16.11. Memory Capacity Exceeded - A flag set in the HLR / VLR when the mobile station has run out of memory for SMS and is temporarily unable to receive more messages.
   16.12. MS - Mobile Station, consists of the mobile device and the SIM identity card.
   16.13. MSC - Mobile Switching Centre, responsible for routing and other traffic in modern telecommunications networks.
   16.14. MSISDN - Mobile Station ISDN, the circuit or line number assigned to a mobile station for purposes of identifying and routing signalling / traffic.
   16.15. NEBS - Network Equipment Building System, a set of technical criteria for telecommunications industry network equipment to define common levels of excellence and reliability.
   16.16. PLMN - Public Land Mobile Network, a term used to describe one logical mobile network, typically a representation of an operator or similar entity.
   16.17 SC Alert - Message sent from the HLR when a mobile station attaches to the network with messages waiting for it on one or more SMSC's.
   16.18. SMPP - Short Message Peer to Peer, a common protocol for interfacing to the application environment on SMSC's.
   16.19. SMSC - Short Message Service Centre, a store and forward device used in mobile networks to facilitate mobile-to-mobile and application services for SMS.
   16.20. SMS Gateway - A device that connects to the SMSC via a common SMSC application interface for purposes of sending and receiving SMS via an application.
   16.21. SMS-IWMSC - SMS Interworking MSC, part of the physical SMSC that is used to send mobile terminated messages.
   16.22. SMS-GMSC - SMS Gateway MSC, part of the physical SMSC that is used to receive mobile originated SMS messages.
   16.23. SME - Short Message Entity, typically the mobile station, a device capable of sending and receiving SMS.
   16.24. SM Memory Capacity Available - A message sent from the mobile station to the HLR to inform it that the MS now has memory available and is capable of receiving SMS messages.
   16.25. SM MO - mobile originated short message, an SMS message originated from a mobile station.
   16.26. SM MT - mobile terminated short message, an SMS message terminated on a mobile station.

Embodiments of the systems and methods described above are set out in more detail in the numbered clauses below:
1. A method of routing a message to an application via a mobile telecommunications network in which mobile devices are assigned globally unique identifiers, comprising:
   assigning at least one globally unique virtual mobile identifier to the application;
   receiving a request for location information for the virtual mobile identifier;
   supplying routing information corresponding to a predefined static connection point to the application in response to the request.
2. A method for providing routing information across a mobile network for at least one application comprising:
   storing at least one globally unique identifier;
   storing an identifier of at least one application assigned to the at least one globally unique identifier;
   storing location information for the at least one application via at least one predefined connection point and;
   responding to requests for location information for the globally unique identifier by supplying routing information for the assigned application.
3. A method according to any preceding clause wherein said virtual mobile identifier corresponds to an MSISDN number for the application.
4. A method according to any preceding clause wherein the location information is stored in at least one network element containing location information for a plurality of mobile devices.
5. A method according to any preceding clause wherein the mobile network has a first network element that stores location information for mobile devices connected to the network, and a second network element containing location information corresponding to the application.
6. A method according to any preceding clause wherein the location information is stored in a plurality of physically separate network elements.
7. A method according to clause 6 wherein the plurality of physically separate network elements are situated at geographically disparate locations.
8. A method according to clause 6 or 7 wherein more than one of the plurality of physically separate network elements stores location information for the same application.
9. A method according to any preceding clause wherein the plurality of physically separate network elements connected by a data transfer link separate to the mobile network.
10. A method according to clause 9 wherein the data transfer link comprises an Internet Protocol (IP) network.
11. A method according to any preceding clause wherein the location information regarding the application is exchanged between the plurality of network elements, preferably over the or a data transfer link separate to the mobile network.
12. A method according to any preceding clause wherein the predefined connection point to the mobile network is provided via a network element providing a static connection between a mobile switching centre (MSC) and an application.
13. A method according to clause 12 wherein the static connection of the application to the mobile network does not pass over the air interface.
14. A method according to clause 12 or 13 wherein the connection of the application to the network element providing a static connection between an MSC and an application is over an Internet Protocol (IP) network.
15. A method according to any of clauses 12 to 14 wherein the connection of the application to the network element providing a static connection between an MSC and an application is a secure connection.
16. A method according to any of clauses 12 to 15 further comprising updating or reconfiguring said static connection.
17. A method according to any of clauses 12 to 16 wherein the static connection of the application to the mobile network bypasses a Short Message Service Centre (SMSC) for messages directed to the application.
18. A method according to any of clauses 12 to 17 wherein the application is connected to the mobile network via a plurality of network elements each providing a static connection between an MSC and the application.
19. A method according to clause 18 wherein the plurality of network elements providing a static connection between an MSC and an application are interconnected by a data transfer link separate to the mobile network.
20. A method according to any preceding clause wherein at least one location network element contains location information for the application and at least one switch network element provides a static connection between an MSC and an application, and wherein the or each location network element and the or each switch network element are interconnected by a data transfer link separate to the mobile network.
21. A method according to clause 20 wherein a location network element is connected to a plurality of switch network elements, providing a plurality of static connections to the network for the application.
22. A method according to any of the preceding clauses further comprising generating a call data record (CDR) containing information including at least one of:
   the originator's MSISDN number;
   the service centre (SC) number;
   the recipient's MSISDN number;
   the time/date that the message was sent;
   identification of the originating account owner and;
   the billing plan of the originator.
23. A method according to clause 22 further comprising providing remote access to the call data records.
24. A method according to clause 21 wherein the location network element selects the static connection through which to route a message to an application based on at least one predetermined criterion.
25. A method according to clause 6 or any clause dependent thereon wherein the routing information provided for a given application varies between network elements within the plurality of network elements.
26. A method for providing routing information across a mobile network for at least one application wherein the routing information supplied in response to a request for information is selected based on at least one condition other than the location of the application.
27. A method according to any preceding clause wherein the routing information is dynamically compiled in response to a request.
28. A method according to clause 26 wherein the routing information comprises information for a route via a connection selected from a plurality of available connections to the application based on the location of the source of the request.
29. A method according to any of clauses 26 to 28 wherein the routing information is provided based on a measure of application availability.
30. A method according to clause 26 wherein a route is selected based on measures of availability of a plurality of connections to the application.
31. A method according to clause 26 wherein the routing information supplied includes a mobile device availability indicator, the method including setting the indicator to unavailable based on a predetermined condition.
32. A method according to any preceding clause including updating or modifying routing information to be supplied based on a measure of application availability.
33. A method according to clause 26 wherein said at least one condition includes the availability of the connection point to the application.
34. A method according to any of clauses 26 to 33 wherein the condition includes a measure of the availability of the application.
35. A method according to any of clauses 26 to 34 wherein the routing information provided is based on a combination of at least two criteria.
36. A method according to clause 35 wherein the combination of predetermined criteria is calculated including a weighting factor for each of the criteria.
37. A method of connecting at least one application to a mobile network comprising:
   providing a connection for at least one application and;
   providing a connection at the core network signalling protocol layer to at least one switch on the mobile network and;
   routing a message directed to the application via said connection.
38. A method according to clause 37 wherein the connection to the at least one application is over a data transfer link separate to the mobile network.
39. A method according to clause 38 wherein the separate data transfer link comprises an Internet Protocol (IP) network.
40. A method according to any of clauses 37 to 39 wherein the connection to the at least one application is via a gateway, which provides an interface between the at least one application and the mobile network.
41. A method according to clause 40 wherein the gateway provides a secure connection between the application and the mobile network.
42. A method according to any of clauses 37 to 41 wherein the connection to the at least one application bypasses the air interface of the mobile network.
43. A method according to any of clauses 37 to 42 wherein the connection to the at least one application bypasses the SMSC that handles message delivery in the mobile network.
44. A method according to any of clauses 37 to 43 wherein the connection to the application comprises a connection via a switch dedicated to serving the at least one application.
45. A method according to any of clauses 37 to 44 wherein the connection to the switch on the mobile network bypasses the network elements that handle message delivery in the mobile network.
46. A method according to any of clauses 37 to 45 wherein the core network signalling protocol comprises the Signalling System number 7 (SS7) protocol.
47. A method for providing routing information for at least one device connected to a mobile network at a plurality of connection points wherein the routing information supplied for routing to the device is dependent on a plurality of predetermined criteria.
48. A method according to clause 47 wherein the predetermined criteria include the geographical location of the source of the request.
49. A method according to clause 47 or 48 wherein the predetermined criteria include the availability of the connection point to the application.
50. A method according to any of clauses 47 to 49 wherein the predetermined criteria include a combination of a plurality of criteria.
51. A method according to clause 50 wherein the combination of predetermined criteria is calculated including a weighting factor for each of the criteria to allow for the relative importance of each of the plurality of criteria.
52. A computer program or computer product comprising instructions for performing a method according to any of the preceding clauses or any of clauses 109 to 112.
53. A data packet for transmission over a network carrying information regarding the status and location of an application.
54. A data packet according to clause 53 wherein the location information includes information for routing a message to the application.
55. A data structure stored in a network element comprising at least one virtual mobile identifier, an identifier of at least one application, and an assignment of at least one application to at least one virtual mobile identifier.
56. Apparatus for configuring a mobile telecommunications system to communicate messages to an application, comprising:
   means for assigning a mobile identifier to the application;
   means for providing a connection from the network to the application;
   means for storing the mobile identifier together with an identifier of the application assigned and routing information for directing communication via said connection.
57. Apparatus for routing a message to an application via a mobile telecommunications network in which mobile devices are assigned globally unique identifiers, comprising:
   means for assigning at least one globally unique virtual mobile identifier to the application;
   means for receiving a request for location information for the virtual mobile identifier;
   means for supplying routing information corresponding to a predefined static connection point to the application in response to the request.
58. Apparatus for providing routing information across a mobile network for at least one application comprising:
   means for storing at least one globally unique identifier;
   means for storing an identifier of at least one application assigned to the at least one globally unique identifier;
   means for storing location information for the at least one application via at least one predefined connection point and;
   responding to requests for location information for the globally unique identifier by supplying routing information for the assigned application.
59. Apparatus according to any of clauses 56 to 58 wherein said virtual mobile identifier corresponds to an MSISDN number for the application.
60. Apparatus according to any of clauses 56 to 59 wherein the location information is stored in at least one network element containing location information for a plurality of mobile devices.
61. Apparatus according to any of clauses 56 to 60 wherein the mobile network has a first network element that stores location information for mobile devices connected to the network, and a second network element containing location information corresponding to the application.
62. Apparatus according to any of clauses 56 to 61 wherein the location information is stored in a plurality of physically separate network elements.
63. Apparatus according to clause 62 wherein the plurality of physically separate network elements are situated at geographically disparate locations.
64. Apparatus according to clause 62 or 63 wherein more than one of the plurality of physically separate network elements stores location information for the same application.
65. Apparatus according to clause 62, 63 or 64 wherein the plurality of physically separate network elements are connected by a data transfer link separate to the mobile network.
66. Apparatus according to any of clauses 56 to 65 wherein the predefined connection point to the mobile network is provided via a network element providing a static connection between a mobile switching centre (MSC) and an application.
67. Apparatus according to clause 66 wherein the static connection of the application to the mobile network does not pass over the air interface.
68. Apparatus according to clause 66 or 67 wherein the connection of the application to the network element providing a static connection between an MSC and an application is over an Internet Protocol (IP) network.
69. Apparatus according to any of clauses 66 to 68 wherein the connection of the application to the network element providing a static connection between an MSC and an application is a secure connection.
70. Apparatus according to any of clauses 66 to 69 further comprising updating or reconfiguring said static connection.
71. Apparatus according to any of clauses 66 to 70 wherein the static connection of the application to the mobile network bypasses a Short Message Service Centre (SMSC) for messages directed to the application.
72. Apparatus according to any of clauses 56 to 71 wherein the application is connected to the mobile network via a plurality of network elements each providing a static connection between an MSC and the application.
73. Apparatus according to clause 72 wherein the plurality of network elements providing a static connection between an MSC and an application are interconnected by a data transfer link separate to the mobile network.
74. Apparatus according to any of clauses 56 to 73 wherein at least one location network element contains location information for the application and at least one switch network element provides a static connection between an MSC and an application, and wherein the or each location network element and the or each switch network element are interconnected by a data transfer link separate to the mobile network.
75. Apparatus according to clause 74 wherein a location network element is connected to a plurality of switch network elements, providing a plurality of static connections to the network for the application.
76. Apparatus according to any of clauses 56 to 75 further comprising means for generating a call data record (CDR) containing information including at least one of:
   the originator's MSISDN number;
   the service centre (SC) number;
   the recipient's MSISDN number;
   the time/date that the message was sent;
   identification of the originating account owner and;
   the billing plan of the originator.
77. Apparatus according to clause 76 further comprising providing remote access to the call data records.
78. Apparatus according to clause 72 wherein the location network element selects the static connection through which to route a message to an application based on at least one predetermined criterion.
79. Apparatus for providing routing information across a mobile network for at least one application wherein routing information for a single application is stored in a plurality of physically separate network elements situated at geographically disparate locations.
80. Apparatus according to any of clauses 56 to 79 wherein the location information is stored in a plurality of physically separate network elements connected by a data transfer link separate to the mobile network.
81. Apparatus according to clause 80 wherein the data transfer link comprises an Internet Protocol (IP) network.
82. Apparatus according to clause 80 or 81 wherein the location information regarding the application is exchanged between the plurality of network elements, preferably over the or a data transfer link separate from the mobile network.
83. Apparatus according to clause 62 or any clause dependent thereon wherein the routing information provided for a given application varies between network elements within the plurality of network elements.
84. Apparatus for providing routing information across a mobile network for at least one application wherein the routing information supplied in response to a request for information is selected based on at least one condition other than the location of the application.
85. Apparatus according to any of clauses 56 to 84 wherein the routing information is dynamically compiled in response to a request.
86. Apparatus according to clause 84 or 85 wherein the routing information comprises information for a route via a connection selected from a plurality of available connections to the application based on the location of the source of the request.
87. Apparatus according to any of clauses 84 to 86 wherein the routing information is provided based on a measure of application availability.
88. Apparatus according to clause 84 wherein a route is selected based on measures of availability of a plurality of connections to the application.
89. Apparatus according to any of clauses 84 to 88 wherein the routing information supplied includes a mobile device availability indicator, the method including setting the indicator to unavailable based on a predetermined condition.
90. Apparatus according to any of clauses 56 to 89 including updating or modifying routing information to be supplied based on a measure of application availability.
91. Apparatus according to clause 84 or 89 wherein said at least one condition includes the availability of the connection point to the application.
92. Apparatus according to clause 84, 89 or 91 wherein the condition includes a measure of the availability of the application.
93. Apparatus according to any of clauses 84 to 92 wherein the routing information provided is based on a combination of at least two criteria.
94. Apparatus according to clause 92 wherein the combination of predetermined criteria is calculated including a weighting factor for each of the criteria.
95. Apparatus for connecting at least one application to a mobile network comprising:
   means for providing a connection for at least one application using a first network protocol and;
   means for providing a connection, using a second protocol, at the core network signalling protocol layer to at least one switch on the mobile network and;
   means for routing a message directed to the application via said connection.
96. Apparatus according to clause 95 wherein the connection to the at least one application is over a data transfer link separate to the mobile network.
97. Apparatus according to clause 96 wherein the separate data transfer link comprises an Internet Protocol (IP) network.
98. Apparatus according to any of clauses 95 to 97 wherein the connection to the at least one application is via a gateway, which provides an interface between the at least one application and the mobile network.
99. Apparatus according to clause 98 wherein the gateway provides a secure connection between the application and the mobile network.
100. Apparatus according to any of clauses 95 to 99 wherein the connection to the at least one application bypasses the air interface of the mobile network.
101. Apparatus according to any of clauses 95 to 100 wherein the connection to the at least one application bypasses the SMSC that handles message delivery in the mobile network.
102. Apparatus according to any of clauses 95 to 101 wherein the connection to the application comprises a connection via a switch dedicated to serving the at least one application.
103. Apparatus according to any of clauses 95 to 102 wherein the connection to the switch on the mobile network bypasses the network elements that handle message delivery in the mobile network.
104. Apparatus according to any of clauses 95 to 103 wherein the core network signalling protocol comprises the Signalling System number 7 (SS7) protocol.
105. Apparatus for providing routing information for at least one device connected to a mobile network at a plurality of connection points wherein the routing information supplied for routing to the device is dependent on a plurality of predetermined criteria.
106. Apparatus according to clause 105 wherein the predetermined criteria include the geographical location of the source of the request.
107. Apparatus according to any of clauses 105 to 106 wherein the predetermined criteria include the availability of the connection point to the application.
108. Apparatus according to any of clauses 105 to 106 wherein the predetermined criteria include a combination of a plurality of criteria.
109. Apparatus according to clause 108 wherein the combination of predetermined criteria is calculated including a weighting factor for each of the criteria to allow for the relative importance of each of the plurality of criteria.
110. A method of connecting at least one application, assigned to at least one virtual mobile number, to a mobile network comprising providing a connection for the at least one application at a switch network element, wherein the switch network element is separate from a location network element, which stores location information to route messages sent to said virtual mobile number to the application via the switching element.
111. A method according to clause 110 wherein the location network element and switch network element are interconnected by a data transfer network separate to the mobile network.
112. A method according to clause 110 or 111 wherein the application is connected to a plurality of switch network elements.
113. A method according to clause 112 wherein at least two of the plurality of switch network elements are served by at least one common location network element.
114. A method of configuring a mobile telecommunications system to communicate messages to an application, comprising:
   assigning a mobile identifier to the application;
   providing a connection from the network to the application;
   storing the mobile identifier together with an identifier of the application assigned and
   routing information for directing communication via said connection.
115. A method of routing messages between an application and a mobile telecommunications network wherein messages are passed from the application to the mobile network without passing through an SMSC.
116. A method according to Clause 115 further comprising:
   receiving the message from the application over a static connection;
   requesting routing information for the globally unique identifier associated with the destination address of the message; and
   routing the message to the message recipient via the mobile network.
117. A method according to Clause 115 or 116 further comprising routing messages from the mobile network to the application according to the method of Clause 1 or any clause dependent thereon.
118. A method according to Clause 116 or 117 wherein the static connection of the application to the mobile telecommunications network does not pass over the air interface.
119. A method according to any of Clauses 115 to 118 wherein the message is routed to the message recipient via at least one component in a network of message delivery points and wherein the message delivery points are interconnected over a network separate to the mobile telecommunications network and wherein the separate network is connected to the SS7 layer of the mobile telecommunications network at a plurality of points.
120. A method according to any of Clauses 115 to 119 wherein messages are automatically rejected according to at least one predetermined condition.
121. A method according to Clause 120 wherein the at least one predetermined condition includes the destination address of the message.
122. A method according to Clause 120 or 121 wherein the at least one predetermined condition includes the identity of the service centre by which the routing information for the application was requested.
123. A method according to any of Clauses 115 to 122 wherein at least one service feature may be selectively made available to at least one application.
124. A method according to Clause 123 wherein a predetermined subset of service features may be provided to at least one application.
125. A method according to Clause 123 or 124 wherein the at least one service feature comprises the provision of at least one of:
   the "Outbind" procedure;
   windowing;
   support for enhanced messaging services.
126. A method according to any of Clauses 115 to 125 further comprising generating internal system reports.
127. A method according to Clause 126 wherein data contained in the internal system reports includes at least one of:
   usage data;
   provisioning information;
   error records.
128. A method according to any of Clauses 115 to 127 further comprising generating user reports for specific applications.
129. A method according to any of Clauses 115 to 128 further comprising providing at least one advanced messaging function.
130. A method according to Clause 129 wherein the at least one advanced messaging function includes at least one of:
   sessions;
   variable retry schedules;
   variable priority levels;
   support for multimedia messaging services.
131. A method according to any of Clauses 115 to 130 wherein the provision of voice services, such as voicemail or Interactive Voice Response, by the application is facilitated.
132. A method according to any of Clauses 115 to 131 wherein at least one message comprises a multimedia message.
133. A method according to any of Clauses 115 to 132 further comprising providing support for high density signalling on the mobile telecommunications network.
134. Apparatus for routing messages between an application and a mobile telecommunications network comprising:
   means for routing messages from the mobile network to the application according to the method of Clause 1 or any clause dependent thereon;
   means for routing messages from the application to the mobile network comprising:
      means for receiving the message from the application over a static connection;
      means for requesting routing information for the globally unique identifier associated with the destination address of the message;
      means for routing the message to the message recipient via the mobile network.
135. Apparatus for routing messages between an application and a mobile telecommunications network wherein the apparatus communicates with the mobile telecommunications network at the SS7 layer and the message is passed to the network bypassing the network SMSCs.
136. Apparatus according to Clause 134 or 135 wherein the memory type used to store the message received from the application depends on the length of time the message is to be stored.
137. Apparatus according to Clause 136 wherein a first type of message storage capability is used for a message that can be routed to its destination without delay.
138. Apparatus according to Clause 136 or 137 wherein a second type of message storage capability is used for a message that cannot be routed to its destination without delay and which must be stored in the apparatus.
139. Apparatus according to any of Clauses 134 to 138 further comprising means for providing support for storage area networking with distributed data stores and data mirroring.
140. Apparatus according to any of Clauses 134 to 139 further comprising a web-based management and provisioning interface.
141. A method of routing at least one message between an application and a mobile telecommunications network via at least one component in a distributed network of message delivery points wherein the distributed network is separate to the mobile telecommunications network and the separate distributed network is connected to the SS7 layer of the mobile telecommunications network at a plurality of points.
142. A method of routing at least one message between an application and a mobile telecommunications network comprising routing the message via;
   a plurality of message delivery points interconnected over a network separate to the mobile telecommunications network and providing an interface to the SS7 layer of the mobile telecommunications network at a plurality of points;
   an application service centre as described in any of Clauses 134 to 140 connected to the application and connected over the separate network to the message delivery points.
143. A method according to Clause 141 or 142 wherein at least one of the message delivery points intercepts any outgoing message from a short message service centre (SMSC) on the mobile telecommunications network.
144. A method according to any of Clauses 141 to 143 wherein at least one of the message delivery points intercepts any message entering the home network at a gateway message switching centre (G-MSC).
145. A method according to any of Clauses 141 to 144 wherein the at least one message is routed over the separate distributed network to the message delivery point that minimises the distance travelled by the message over the SS7 layer of the mobile telecommunications network.
146. Apparatus for routing at least one message between an application and a mobile telecommunications network comprising;
   a plurality of message delivery points connected over a network separate to the mobile telecommunications network and providing an interface to the SS7 layer of the mobile telecommunications network at a plurality of points;
   an application service centre as described in any of Clauses 134 to 140 connected to the application and connected over the separate network to the message delivery points.

## Claims

1. A method of providing routing information for messages sent to or from an application connected to a mobile telecommunications network, the method comprising:
providing at least one location network element containing location information for the application;
providing at least one switch network element providing a static connection between the application and a mobile switching centre of the mobile network;
connecting the location network element and the switch network element via a data transfer link separate to the mobile network;
monitoring the load on the at least one switch network element at the location network element;
supplying routing information from the location network element, wherein the routing information supplied is dependent on the load determined on the switch network element.

2. A method according to Claim 1 further comprising providing a plurality of switch network elements interconnected by a data transfer link separate to the mobile network.

3. A method according to Claim 1 or 2 further comprising providing a plurality of location network elements interconnected by a data transfer link separate to the mobile network.

4. A method according to any preceding claim wherein the routing information supplied is arranged to maximise the message throughput for the system.

5. A method according to any preceding claim further comprising providing a plurality of switch network elements, wherein the routing information supplied determines the switch network element used to transmit the message.

6. A method according to any preceding claim further comprising routing a message to the application via a mobile telecommunications network in which mobile devices are assigned globally unique identifiers, comprising
assigning at least one globally unique virtual mobile identifier to the application;
receiving a request for location information for the virtual mobile identifier;
supplying routing information corresponding to a predefined static connection point to the application in response to the request.

7. Apparatus for providing routing information for messages sent to or from an application connected to a mobile telecommunications network, the apparatus comprising:
at least one location network element containing location information for the application;
at least one switch network element providing a static connection between the application and a mobile switching centre of the mobile network;
wherein the location network element and the switch network element are connected via a data transfer link separate to the mobile network;
means for monitoring the load on the at least one switch network element at the location network element;
means for supplying routing information from the location network element, wherein the routing information supplied is dependent on the load determined on the switch network element.

8. A method of providing a connection point to a mobile telecommunications network for an application, the method comprising:
providing a static connection between a mobile switching centre of the mobile telecommunications network and the application via at least one network element;
periodically updating the static connection;
preferably wherein updating the static connection comprises defining an alternative route for delivering messages to the application;
preferably wherein the static connection is updated based on the availability of the application; and
preferably wherein the static connection is provided via at least one dedicated network element or via a network of interconnected dedicated network elements.

9. A method according to Claim 8 further comprising:
assigning at least one globally unique virtual mobile identifier to the application;
receiving a request for location information for the virtual mobile identifier;
supplying routing information corresponding to the static connection in response to the request.

10. Apparatus for providing a connection point to a mobile telecommunications network for an application, the apparatus comprising:
means for providing a static connection between a mobile switching centre of the mobile telecommunications network and the application via at least one network element;
means for periodically updating the static connection.

11. A message routing and switching component in a mobile telecommunications network, the component comprising a plurality of nodes interconnected over a network separate to the mobile telecommunications network, wherein each node comprises a plurality of agents each having a predefined function and a plurality of queues;
preferably wherein queues are replicated between nodes over the connection separate to the mobile telecommunications network;
preferably wherein the component further comprises a plurality of storage means and wherein messages or routing information stored in the storage means are replicated between the plurality of storage means;
the component preferably further comprising means for monitoring the availability of applications connected to the message routing and switching component;
preferably wherein the component further comprises means for performing dynamic queue optimisation on items in the plurality of queues; and
preferably wherein the component further comprises a wiring layer for selectively connecting agents to perform a task at the component.

12. A computer program or computer program product for carrying out a method according to any preceding method claim.
